(19)

**Europäisches Patentamt**
**European Patent Office**
**Office européen des brevets**

(11) **EP 4 693 476 A1**

(12) **EUROPEAN PATENT APPLICATION**
published in accordance with Art. 153(4) EPC

(43) Date of publication:
**11.02.2026 Bulletin 2026/07**

(21) Application number: **24895494.3**

(22) Date of filing: **29.05.2024**

(51) International Patent Classification (IPC):
$H01M\ 4/36^{(2006.01)}$     $H01M\ 4/134^{(2010.01)}$
$H01M\ 10/0525^{(2010.01)}$     $H01M\ 4/583^{(2010.01)}$
$H01M\ 10/00^{(2006.01)}$     $H01M\ 4/02^{(2006.01)}$

(52) Cooperative Patent Classification (CPC):
**H01M 4/02; H01M 4/134; H01M 4/36; H01M 4/38;
H01M 4/583; H01M 4/587; H01M 10/00;
H01M 10/0525;** Y02E 60/10

(86) International application number:
**PCT/CN2024/095941**

(87) International publication number:
**WO 2025/112384 (05.06.2025 Gazette 2025/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.11.2023 CN 202311639597**

(71) Applicant: **Contemporary Amperex Technology
Co., Limited
Ningde, Fujian 352100 (CN)**

(72) Inventors:
• **WU, Kai**
**Ningde, Fujian 352100 (CN)**

• **DENG, Jingxian**
**Ningde, Fujian 352100 (CN)**
• **WANG, Jiazheng**
**Ningde, Fujian 352100 (CN)**
• **LV, Zijian**
**Ningde, Fujian 352100 (CN)**
• **LIU, Liangbin**
**Ningde, Fujian 352100 (CN)**
• **CHEN, Wenqiang**
**Ningde, Fujian 352100 (CN)**
• **XIE, Shuai**
**Ningde, Fujian 352100 (CN)**

(74) Representative: **Lorenz Seidler Gossel Part. mbB
Widenmayerstr. 23
80538 München (DE)**

(54) **NEGATIVE ELECTRODE ACTIVE MATERIAL, SECONDARY BATTERY AND ELECTRIC
DEVICE**

(57) A negative electrode active material, a secondary battery and an electrical apparatus. The negative electrode active material includes a silicon-carbon composite material, where the silicon-carbon composite material includes a first silicon-carbon composite particle and a second silicon-carbon composite particle; the first silicon-carbon composite particle includes a first carbon matrix having a pore structure and a first silicon-based material arranged in the pore structure of the first carbon matrix; the second silicon-carbon composite particle includes a second carbon matrix having a pore structure and a second silicon-based material arranged in the pore structure of the second carbon matrix; and a mass percentage content of a silicon element in the first silicon-carbon composite particle is greater than a mass percentage content of a silicon element in the second silicon-carbon composite particle. The silicon-carbon negative electrode material has good cycle stability as well as high gram capacity, which can improve an energy density and cycle performance of the battery.

FIG. 1

EP 4 693 476 A1

**Description**

**CROSS-REFERENCE TO RELATED APPLICATION**

The present application claims the priority of Chinese patent application No. 202311639597.X filed on November 30, 2023 and entitled "NEGATIVE ELECTRODE ACTIVE MATERIAL, SECONDARY BATTERY, AND ELECTRICAL APPARATUS", the entire content of which is incorporated herein by reference.

**TECHNICAL FIELD**

The present application relates to the technical field of lithium batteries, in particular to a negative electrode active material, a secondary battery and an electrical apparatus.

**BACKGROUND**

In recent years, as the application range of batteries represented by lithium ion batteries becomes wider and wider, the batteries have been widely applied in hydropower, firepower, wind power and solar power stations and other energy storage power supply systems, as well as in many fields of electric tools, electric bicycles, electric motorcycles, electric vehicles, military equipment, aerospace and the like. Due to the great development of the batteries, higher requirements have also been put forward for their energy density, cycle performance, safety and the like. Silicon-based negative electrode materials are considered to be the best choice to meet high energy density requirements due to their high specific capacity.

However, the silicon-based negative electrode materials have a large volume expansion rate and poor cycle stability during a cycle process, which may lead to reduced battery cycle performance. Therefore, the silicon-based negative electrode materials need to be further improved.

**SUMMARY**

The present application provides a negative electrode active material, a secondary battery and an electrical apparatus. The silicon-carbon negative electrode material has good cycle stability as well as a high gram capacity.

In a first aspect, the present application provides a negative electrode active material, including a silicon-carbon composite material, where the silicon-carbon composite material includes a first silicon-carbon composite particle and a second silicon-carbon composite particle; the first silicon-carbon composite particle includes a first carbon matrix having a pore structure and a first silicon-based material arranged in the pore structure of the first carbon matrix; the second silicon-carbon composite particle includes a second carbon matrix having a pore structure and a second silicon-based material arranged in the pore structure of the second carbon matrix; and a mass percentage content of a silicon element in the first silicon-carbon composite particle is greater than a mass percentage content of a silicon element in the second silicon-carbon composite particle.

According to the present application, the negative electrode active material includes the silicon-carbon composite material, the silicon-carbon composite material includes two silicon-carbon composite particles with different silicon contents. The first silicon-carbon composite particle with a higher silicon content is beneficial to improving a gram capacity of the silicon-carbon negative electrode material, and the second silicon-carbon composite particles with a lower silicon content is beneficial to improving the cycle stability of the silicon-carbon negative electrode material. The two silicon-carbon composite particles work together to enable the silicon-carbon composite material to have good cycle stability as well as the high gram capacity, thereby improving the energy density and cycle performance of the battery.

In some implementations, the mass percentage content of the silicon element in the first silicon-carbon composite particle is ≥50%, optionally, 50% to 60%; and/or, the mass percentage content of the silicon element in the second silicon-carbon composite particle is ≤47%, optionally, 38% to 47%. At this time, the silicon-carbon composite material as a whole has a higher gram capacity and better cycle stability.

In some implementations, the mass percentage content of the silicon element in the first silicon-carbon composite particle is recorded as $\omega_1$, the mass percentage content of the silicon element in the second silicon-carbon composite particle is recorded as $\omega_2$, and the negative electrode active material satisfies: $1.06 \leq \omega_1/\omega_2 \leq 1.6$, optionally, 1.1-1.3. At this time, the silicon-carbon composite material as a whole has the higher gram capacity and better cycle stability.

In some implementations, the first carbon matrix includes a micropore structure, and the micropore structure in the first carbon matrix has a pore volume $V_1 \geq 0.6$ cm$^3$/g, optionally, 0.6-0.75 cm$^3$/g; and/or, the second carbon matrix includes a micropore structure, and the micropore structure in the second carbon matrix has a pore volume $V_2 \geq 0.4$ cm$^3$/g, optionally, 0.5-0.7 cm$^3$/g. At this time, the first silicon-carbon composite particle and/or the second silicon-carbon composite particle have better cycle stability, which can further improve the overall cycle stability of the silicon-carbon composite material and further improve the cycle performance of the battery.

In some implementations, the first carbon matrix and the second carbon matrix each include the micropore structure, and the pore volume of the micropore structure in the first carbon matrix is greater than the pore volume of the micropore structure in the second carbon matrix. The first silicon-carbon composite particle and the second silicon-carbon composite particle have better cycle stability, which can further improve the overall cycle stability of the silicon-carbon composite material and further improve the cycle performance of the battery.

In some implementations, the pore structure in the first carbon matrix has an average pore diameter $d_1 \leq 5$ nm, optionally, 1 nm to 4 nm; and/or, the pore structure in the second carbon matrix has an average pore diameter $d_2 \leq 10$ nm, optionally, 3 nm to 5 nm. An appropriate pore diameter is conducive to reducing a volume change rate of the first silicon-carbon composite particle and/or the second silicon-carbon composite particle, and the cycle stability is better, which can further improve the overall cycle stability of the silicon-carbon composite material and further improve the cycle performance of the battery.

In some implementations, the average pore diameter of the pore structure in the first carbon matrix is less than the average pore diameter of the pore structure in the second carbon matrix. At this time, the first silicon-carbon composite particle has better cycle stability, and the second silicon-carbon composite particle may reserve a larger expandable space, which can further improve the overall cycle stability of the silicon-carbon composite material and further improve the cycle performance of the battery.

In some implementations, the first carbon matrix has a specific surface area $BET_1 \geq 1800$ m$^2$/g, optionally, 1800 m$^2$/g to 2000 m$^2$/g; and/or, the second carbon matrix has a specific surface area $BET_2 \geq 1600$ m$^2$/g, optionally, 1600 m$^2$/g to 1800 m$^2$/g. At this time, pore structure(s) of the first silicon-carbon composite particle and/or the second silicon-carbon composite particle may accommodate more silicon-based materials, and the first silicon-carbon composite particle and/or the second silicon-carbon composite particle have better cycle stability, which can further improve the overall cycle stability of the silicon-carbon composite material and further improve the cycle performance of the battery.

In some implementations, the specific surface area of the first carbon matrix is greater than the specific surface area of the second carbon matrix. At this time, the first silicon-carbon composite particle has better cycle stability, and the second silicon-carbon composite particle may more stable structure, which can further improve the overall cycle stability of the silicon-carbon composite material and further improve the cycle performance of the battery.

In some implementations, based on the silicon-carbon composite material, a mass content of the first silicon-carbon composite particle is less than a mass content of the second silicon-carbon composite particle. At this time, the silicon-carbon composite material as a whole has the better cycle stability, which further improves the cycle performance of the battery.

In some implementations, based on the silicon-carbon composite material, the mass content of the first silicon-carbon composite particle is $\leq 10\%$, optionally, 0.1% to 5%; and/or, based on the silicon-carbon composite material, the mass content of the second silicon-carbon composite particle is $\geq 80\%$, optionally, 80% to 99.8%. At this time, the silicon-carbon composite material as a whole has the better cycle stability, which further improves the cycle performance of the battery.

In some implementations, at least a part of a surface of the first silicon-carbon composite particle and/or the second silicon-carbon composite particle has a coating layer, and optionally, the coating layer is a carbon coating layer. At this time, the first silicon-carbon composite particle and/or the second silicon-carbon composite particle have/has a less side reaction with an electrolyte solution, the silicon-carbon composite material as a whole has the better cycle stability, which further improves an initial efficiency and the cycle performance of the battery.

In some implementations, the silicon-carbon composite material further includes a third silicon-carbon composite particle, the third silicon-carbon composite particle includes a third carbon matrix having a pore structure and a third silicon-based material arranged in the pore structure of the third carbon matrix, a mass percentage content of a silicon element in the third silicon-carbon composite particle is less than the mass percentage content of the silicon element in the first silicon-carbon composite particle, and the mass percentage content of the silicon element in the third silicon-carbon composite particle is less than the mass percentage content of the silicon element in the second silicon-carbon composite particle. The third silicon-carbon composite particle can further improve the overall cycle stability of the silicon-carbon composite material and further improve the cycle performance of the battery.

In some implementations, the silicon-carbon composite material further includes the third silicon-carbon composite particle, the first silicon-carbon composite particle includes the third carbon matrix having the pore structure and the third silicon-based material arranged in the pore structure of the third carbon matrix, an average pore diameter of the pore structure in the third carbon matrix is less than the average pore diameter of the pore structure in the first carbon matrix, and the average pore diameter of the pore structure in the third carbon matrix is less than the average pore diameter of the pore structure in the second carbon matrix. At this time, a processing property of the silicon-carbon composite material may be improved, a compacted density of a negative electrode plate is improved, and it is conducive to improving the energy density of the battery.

In some implementations, the silicon-carbon composite material further includes the third silicon-carbon composite particle, the first silicon-carbon composite particle includes a third carbon matrix having a pore structure and a third silicon-based material arranged in the pore structure of the third carbon matrix, a specific surface area of the third carbon matrix is less than the specific surface area of the first carbon matrix, and the specific surface area of the third carbon matrix is less than the specific surface area of the second carbon matrix. At this time, the processing property of the silicon-carbon composite material may be improved, the compacted density of the negative electrode plate is improved, and it is conducive to improving the energy density of the battery.

In some implementations, the third silicon-carbon composite particle satisfies at least one of the following conditions: 1) the mass percentage content of the silicon element in the third silicon-carbon composite particle is $\leq 25\%$, optionally, 20% to 25%; 2) the pore structure in the third carbon matrix has the average pore diameter $d_3 \leq 4$ nm, optionally, 1 nm to 3 nm; 3) the third carbon matrix includes micropores having a pore diameter <2 nm, a percentage p for which a pore volume of each micropore accounts of a total pore volume is $\geq 60\%$, optionally, 70% to 85%; 4) a powder compacted density of the third carbon matrix under a pressure of 49000N is 0.4 $g/cm^3$ to 1.1 $g/cm^3$, preferably, 0.4 $g/cm^3$ to 0.8 $g/cm^3$; and 5) the third carbon matrix has the specific surface area $BET_3 \geq 1000$ $m^2/g$, preferably, 1000 $m^2/g$ to 1300 $m^2/g$. At this time, the energy density and cycle performance of the battery are better.

In some implementations, at least one of the first silicon-based material, the second silicon-based material, or the third silicon-based material includes silicon grains; optionally, a grain size of the silicon grains is less than or equal to 10 nm. At this time, the first silicon-carbon composite particle, the second silicon-carbon composite particle or the third silicon-carbon composite particle has a less volume change rate, the silicon-carbon composite material as a whole has the better cycle stability, which further improves the cycle performance of the battery.

In some implementations, the silicon-carbon composite material satisfies at least one of the following conditions: 1) the specific surface area of the silicon-carbon composite material is less than or equal to 6 $m^2/g$, optionally, $\leq 4$ $m^2/g$; 2) a volume average particle diameter Dv50 of the silicon-carbon composite material is in a range from 5 $\mu m$ to 15 $\mu m$, optionally, 5 $\mu m$ to 10 $\mu m$; 3) based on a total mass of the silicon-carbon composite material, the mass percentage content of the silicon element in the silicon-carbon composite material is in a range from 35% to 50%, optionally, 40% to 50%; 4) a porosity of the silicon-carbon composite material is in a range from 45% to 65%, optionally, 45% to 55%; 5) a powder compacted density of the silicon-carbon composite material under the pressure of 49000N is in a range from 0.8 $g/cm^3$ to 1.2 $g/cm^3$, optionally, 0.9 $g/cm^3$ to 1.1 $g/cm^3$; 6) a tap density of the silicon-carbon composite material is in a range from 0.6 $g/cm^3$ to 1.0 $g/cm^3$, optionally, 0.7 $g/cm^3$ to 0.9 $g/cm^3$; 7) a powder resistivity of the silicon-carbon composite material is $\leq 5\Omega \cdot cm$, optionally, $\leq 3\Omega \cdot cm$; and 8) the silicon-carbon composite material satisfies (Dv90-Dv10)/Dv50$\leq 5$, optionally, $\leq 2.5$. At this time, the energy density and cycle performance of the battery are better.

In a second aspect, the present application provides a secondary battery, including a negative electrode plate, the negative electrode plate includes a negative electrode current collector and a negative electrode film layer, the negative electrode film layer includes a negative electrode active material, and the negative electrode active material includes the silicon-carbon composite material described in any one of implementations in the first aspect.

In a third aspect, the present application provides an electrical apparatus, including the secondary battery described in the second aspect.

## BRIEF DESCRIPTION OF DRAWINGS

FIG. 1 is a schematic diagram of a battery cell in an implementation of the present application.
FIG. 2 is an exploded view of a battery cell shown in FIG. 1 in an implementation of the present application.
FIG. 3 is a schematic diagram of a battery module in an implementation of the present application.
FIG. 4 is a schematic diagram of a battery in an implementation of the present application.
FIG. 5 is an exploded view of a battery shown in FIG. 4 in an implementation of the present application.
FIG. 6 is a schematic diagram of an electrical apparatus using a battery cell as a power supply in an implementation of the present application.

Description of reference numerals:
1, secondary battery; 2, upper box body; 3, lower box body; 4, battery module; 5, battery cell; 51, case; 52, electrode assembly; and 53, top cover assembly.

## DETAILED DESCRIPTION

Hereinafter, implementations of a silicon-carbon negative electrode material, a negative electrode plate, a battery and an electrical apparatus of the present application are described in detail and specifically disclosed with appropriate reference to the accompanying drawings. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the accompanying drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, wherein a and b are both real numbers. For example, the numerical range "0-5" indicates that all real numbers between "0-5" have been listed herein, and "0-5" is only a shortened representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all the embodiments and optional embodiments of the present application can be combined with each other form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), which means that the method may comprise steps (a) and (b) performed in order, or may comprise steps (b) and (a) performed in order. For example, a method may further include step (c), which means that step (c) may be added to the method in any order. For example, the method may include steps (a), (b) and (c), or may further include steps (a), (c) and (b), or may further include steps (c), (a) and (b), and the like.

As described in the above background, a silicon-based negative electrode material has a large gram capacity but has a large volume expansion rate during a cycle process, which leads to poor cycle stability and poor battery cycle performance.

In this regard, the relevant technology may blend a silicon-based negative electrode material and a carbon-based negative electrode material with good cycle stability as a negative electrode material, or directly composite the silicon-based negative electrode material with the carbon-based negative electrode material as a negative electrode material. However, the problem is that as a content of a silicon element in the above-mentioned negative electrode material increases, the cycle performance of the battery decreases, so a battery having good energy density as well as good cycle performance is difficult to obtain.

Based on this, the present application provides a negative electrode active material with high gram capacity and cycle stability, which can be used in batteries to effectively improve the energy density and cycle performance of the batteries. Specific implementations of the present application may be described in detail hereinafter.

Negative electrode active material

In a first aspect, the present application provides a negative electrode active material, including a silicon-carbon composite material. The silicon-carbon composite material includes a first silicon-carbon composite particle and a second silicon-carbon composite particle; the first silicon-carbon composite particle includes a first carbon matrix having a pore structure and a first silicon-based material arranged in the pore structure of the first carbon matrix; the second silicon-carbon composite particle includes a second carbon matrix having a pore structure and a second silicon-based material arranged in the pore structure of the second carbon matrix; and a mass percentage content of a silicon element in the first silicon-carbon composite particle is greater than a mass percentage content of a silicon element in the second silicon-carbon composite particle.

According to the present application, the negative electrode active material includes the silicon-carbon composite material. The silicon-carbon composite material includes two carbon-silicon composite particles with different silicon contents. The silicon-carbon composite particles each include a carbon matrix and a silicon-based material arranged in the pore structure of the carbon matrix. It can be understood that although the silicon-based material has a large volume change rate during a charge and discharge process, the pore structure of the carbon matrix can limit the impact of its volume change on an overall volume of the silicon-carbon composite particles, so that the two silicon-carbon composite particles have a smaller volume change rate, and thus the silicon-carbon composite material has better cycle stability, which is beneficial to improving the cycle performance of the battery. On the other hand, the mass percentage contents of the silicon elements in the two silicon-carbon composite particles are different. The mass percentage content of the silicon element in the first silicon-carbon composite particle is greater than the mass percentage content of the silicon element in the second silicon-carbon composite particle, so a gram capacity of the first silicon-carbon composite particle is higher, thereby improving the overall gram capacity of the silicon-carbon composite material. The volume change rate of the second silicon-carbon composite particle during the charge and discharge process is smaller. When the two particles are mixed, space for the volume change of the first silicon-carbon composite particle may be reserved, thereby reducing the extrusion between particles of the silicon-carbon negative electrode material during the charge and discharge process, alleviating particle breakage caused by volume expansion, and then effectively improving the overall cycle stability of the silicon-carbon composite material. Therefore, using the silicon-carbon composite material as the negative electrode active material can improve the energy density and cycle performance of the battery.

It should also be noted that the first silicon-carbon composite particle and the second silicon-carbon composite particle are two different silicon-carbon composite particles. Although the two particles are distinguished only by the silicon content, generally speaking, in the silicon-carbon composite material, a difference between the mass percentage content of the silicon element in the first silicon-carbon composite particle and the mass percentage content of the silicon element in the second silicon-carbon composite particle is no less than 0.5%. Prior to the present application, carbon-silicon composite particles have been used as negative electrode active materials, but usually a type of silicon-carbon composite particles is used as the negative electrode active material. Silicon-carbon composite particles with a certain silicon content can be prepared by known methods (such as vapor deposition, etc.). Although the carbon-silicon composite particle prepared under the same conditions may still have a certain difference from a content of a silicon element in an actually obtained carbon-silicon composite particle, the difference is small and not enough to distinguish them as two different silicon-carbon composite particles, and cannot meet the requirements of the implementations of the present application.

In some implementations, the mass percentage content of the silicon element in the first silicon-carbon composite particle is ≥50%; and/or, the mass percentage content of the silicon element in the second silicon-carbon composite particle is ≤47%.

In some implementations above, the mass percentage content of the silicon element in the first silicon-carbon composite particle is no less than 50%, namely, the first silicon-carbon composite particle has a higher gram capacity, which is conducive to further improving the energy density of the battery. For example, the mass percentage content of the silicon element in the first silicon-carbon composite particle may be 50%, 51%, 52%, 53%, 54%, 55%, 56%, 57%, 58%, 59%, 60%, 61%, 62%, 63%, 64%, 65%, or within a range from any one of the above numerical values to another numerical value. Further, the mass percentage content of the silicon element in the first silicon-carbon composite particle may be in a range from 50% to 60%, at this time, the first silicon-carbon composite particle has better stability and is not prone to breaking during a charge and discharge process, which may further improve the cycle stability of the silicon-carbon composite material and further improve the cycle performance of the battery.

The mass percentage content of the silicon element in the second silicon-carbon composite particle does not exceed 47%, at this time, the second silicon-carbon composite particle has a small volume change rate during the charge and discharge process, more space may be reserved to be adapted to a volume change of the first silicon-carbon composite particle, mutual extrusion of the silicon-carbon composite material during the charge and discharge process is relieved, thus the overall cycle stability of the silicon-carbon composite material is improved, and the cycle performance of the battery is further improved. For example, the mass percentage content of the silicon element in the second silicon-carbon composite particle may be 47%, 46%, 45%, 44%, 43%, 42%, 41%, 40%, 39%, 38%, 37%, 36%, 35%, or within a range from any one of the above numerical values to another numerical value. Further, the mass percentage content of the silicon element in the second silicon-carbon composite particle may be in a range from 38% to 47%, at this time, the second silicon-carbon composite particle has a higher gram capacity, which is conducive to improving the energy density of the battery.

In some implementations, the mass percentage content of the silicon element in the first silicon-carbon composite particle is recorded as $\omega_1$, the mass percentage content of the silicon element in the second silicon-carbon composite particle is recorded as $\omega_2$, and the negative electrode active material satisfies: $1.06 \leq \omega_1/\omega_2 \leq 1.6$.

In some of the above-mentioned implementations, a relationship between the mass percentage contents of the silicon elements in the first silicon carbon composite particle and the second silicon carbon composite particle is further limited. It can be understood that in the silicon carbon composite material, the two silicon carbon composite material particles cooperate with each other to enable the silicon-carbon composite material as a whole to have both higher gram capacity and cycle stability. When the negative electrode active material satisfies: $1.06 \leq \omega_1/\omega_2 \leq 1.6$, the acting force of mutual extrusion of the two particles during the charge and discharge process may be further alleviated, thereby ensuring the stability of the particles. At the same time, the silicon carbon composite material has the higher gram capacity, further improving the energy density and cycle performance of the battery. For example, $\omega_1/\omega_2$ may be 1.06, 1.1, 1.15, 1.2, 1.25, 1.3, 1.35, 1.4, 1.45, 1.5, 1.55, 1.6, or within a range from any one of the above numerical values to another numerical value. Further, $\omega_1/\omega_2$ may be in a range from 1.1 to 1.3, at this time, the silicon-carbon composite material as a whole has the higher gram capacity and better cycle stability, and the energy density and the cycle performance of the battery are better.

In some implementations, the first carbon matrix includes a micropore structure, the micropore structure in the first carbon matrix has a pore volume $V_1 \geq 0.6$ cm$^3$/g; and/or, the second carbon matrix includes a micropore structure, and the micropore structure in the second carbon matrix has a pore volume $V_2 \geq 0.4$ cm$^3$/g, optionally, 0.5 cm$^3$/g to 0.7 cm$^3$/g.

In some implementations above, the first carbon matrix includes the micropore structure and the micropore structure has the pore volume $V_1 \geq 0.6$ cm$^3$/g, and it can be understood that a micropore has a content known in the art and refers to a pore channel having a diameter less than 2 nm, and at the same time, according to a pore diameter of the pore channel, the pore channel may also be divided into a mesopore and a macropore, where the mesopore has a pore diameter ranging from 2 nm to 50 nm, and the macropore has a pore diameter greater than 50 nm. The first silicon-based material in the micropore structure has a small particle diameter, a volume change rate of the first silicon-based material with the small particle diameter is smaller during the charge and discharge process, so the greater the pore volume of the micropore structure is, the better the cycle stability of the first silicon-carbon composite particle is, the overall cycle stability of the silicon-carbon composite material may be further improved, and the cycle performance of the battery is better. For example, the pore volume $V_1$ of the micropore structure in the first carbon matrix may be 0.6 cm$^3$/g, 0.62 cm$^3$/g, 0.64 cm$^3$/g, 0.65 cm$^3$/g, 0.67 cm$^3$/g, 0.69 cm$^3$/g, 0.7 cm$^3$/g, 0.72 cm$^3$/g, 0.74 cm$^3$/g, 0.75 cm$^3$/g, 0.77 cm$^3$/g, 0.8 cm$^3$/g, or within a range from any one of the above numerical values to another numerical value. Further, the pore volume $V_1$ of the micropore structure in the first carbon matrix may be in a range from 0.6 cm$^3$/g to 0.75 cm$^3$/g, at this time, more first silicon-based materials are arranged in the micropore structure, the first silicon-carbon composite particle has the better cycle stability, the silicon-carbon composite material as a whole has the better cycle stability, and the cycle performance of the battery is further improved.

Similarly, the second carbon matrix includes the micropore structure, and in a case where the micropore structure in the second carbon matrix has the pore volume $V_2 \geq 0.4$ cm$^3$/g, the first silicon-carbon composite particle has the better cycle stability, so the overall cycle stability of the silicon-carbon composite material is further improved, and the cycle performance of the battery is better. For example, the pore volume $V_2$ of the micropore structure in the second carbon matrix may be 0.4 cm$^3$/g, 0.42 cm$^3$/g, 0.45 cm$^3$/g, 0.48 cm$^3$/g, 0.5 cm$^3$/g, 0.52 cm$^3$/g, 0.55 cm$^3$/g, 0.58 cm$^3$/g, 0.6 cm$^3$/g, 0.62 cm$^3$/g, 0.65 cm$^3$/g, 0.69 cm$^3$/g, 0.7 cm$^3$/g, 0.72 cm$^3$/g, 0.74 cm$^3$/g, 0.75 cm$^3$/g, or within a range from any one of the above numerical values to another numerical value. Further, the pore volume $V_2$ of the micropore structure in the second carbon matrix may be in a range from 0.5 cm$^3$/g to 0.7 cm$^3$/g, at this time, the silicon-carbon composite material as a whole has the better cycle stability, and the cycle performance of the battery is further improved.

In some implementations, the first carbon matrix and the second carbon matrix each include the micropore structure, and the pore volume of the micropore structure in the first carbon matrix is greater than the pore volume of the micropore structure in the second carbon matrix.

In some of the above-mentioned embodiments, the first carbon matrix and the second carbon matrix each include the micropore structure. At this time, the first silicon-carbon composite particle and the second silicon-carbon composite particle both have good cycle stability. At the same time, the silicon content in the first silicon-carbon composite particle is higher than that in the second silicon-carbon composite particle. A larger pore volume of the micropore structure is needed so that the silicon-based material is arranged in the micropore structure, thereby improving the cycle stability of the silicon-carbon composite particle. As a result, the pore volume of the micropore structure in the first carbon matrix is greater than the pore volume of the micropore structure in the second carbon matrix, which can further improve the overall cycle stability of the silicon-carbon composite material and further improve the cycle performance of the battery.

In some implementations, the pore structure in the first carbon matrix has an average pore diameter $d_1 \leq 5$ nm, optionally, 1 nm to 4 nm; and/or, the pore structure in the second carbon matrix has an average pore diameter $d_2 \leq 10$ nm, optionally, 3 nm to 5 nm.

In some implementations above, the average pore diameter $d_1$ of the pore structure in the first carbon matrix does not exceed 5 nm, it can be understood that the smaller the average pore diameter of the pore structure in the first carbon matrix is, the smaller the average particle diameter of the first silicon-based material in the pore structure is, thus the first silicon-based material has the smaller volume change rate during the charge and discharge process, the first silicon-carbon composite particle has the better cycle stability, the overall cycle stability of the silicon-carbon composite material may be further improved, and the cycle performance of the battery is further improved. For example, the average pore diameter $d_1$ of the pore structure in the first carbon matrix may be 5 nm, 4.5 nm, 4 nm, 3.5 nm, 3 nm, 2.5 nm, 2 nm, 1.5 nm, 1 nm, or within a range from any one of the above numerical values to another numerical value. Further, the average pore diameter $d_1$ of the pore structure in the first carbon matrix may be in a range from 1 nm to 4 nm, at this time, the first silicon-carbon composite particle has the better cycle stability, the silicon-carbon composite material as a whole has the better cycle stability, and the cycle performance of the battery is further improved.

Similarly, the average pore diameter $d_2$ of the pore structure in the second carbon matrix does not exceed 10 nm. At this time, the volume change rate of the second silicon-based material during the charge and discharge process is smaller, and the cycle stability of the second silicon-carbon composite particle is better, which can further improve the overall cycle stability of the silicon-carbon composite material and further improve the cycle performance of the battery. For example, the average pore diameter $d_2$ of the pore structure in the second carbon matrix may be 10 nm, 9.5 nm, 9 nm, 8.5 nm, 8 nm, 7.5 nm, 7 nm, 6.5 nm, 6 nm, 5.5 nm, 5 nm, 4.5 nm, 4 nm, 3.5 nm, 3 nm, or within a range from any one of the above numerical values to another numerical value. Further, the average pore diameter $d_2$ of the pore structure in the second carbon matrix may be in a range from 3 nm to 4 nm, at this time, the second silicon-carbon composite particle has the better cycle stability, the silicon-carbon composite material as a whole has the better cycle stability, and the cycle performance of the battery is further improved.

In some implementations, the average pore diameter of the pore structure in the first carbon matrix is less than the average pore diameter of the pore structure in the second carbon matrix.

In some of the above-mentioned embodiments, since the mass percentage content of the silicon element in the first silicon-carbon composite particle is higher than that in the first silicon-carbon composite particle, the volume change rate of the first silicon-carbon composite particle may be reduced by further reducing the average pore diameter of the pore structure of the first carbon matrix, thereby improving the cycle stability. At the same time, it can be understood that the second carbon matrix with a larger average pore diameter is not prone to breaking during an extrusion process, so that it can better adapt to the volume expansion of the first silicon-carbon composite particle, which can further improve the overall cycle stability of the silicon-carbon composite material and further improve the cycle performance of the battery.

In some implementations, the first carbon matrix has the specific surface area $BET_1 \geq 1800$ m²/g, optionally, 1800 m²/g to 2000 m²/g; and/or, the second carbon matrix has the specific surface area $BET_2 \geq 1600$ m²/g, optionally, 1600 m²/g to 1800 m²/g.

In some of the above implementations, the specific surface area $BET_1$ of the first carbon matrix may be no less than 1800 m²/g. In this case, there is enough space in the pore structure of the first carbon matrix to accommodate more first silicon-based materials. A particle diameter of the first silicon-based material in the pore structure is limited by the pore structure, and the effect of the volume expansion of the first silicon-based material on the first silicon-carbon composite particle can also be limited. Therefore, the first silicon-carbon composite particle has the better cycle stability while having the higher gram capacity. For example, the specific surface area $BET_1$ of the first carbon matrix may be 18001800 m²/g, 1850 m²/g, 1900 m²/g, 1950 m²/g, 2000 m²/g, 2050 m²/g, 2100 m²/g, 2200 m²/g, 2300 m²/g, 2400 m²/g, or within a range from any one of the above numerical values to another numerical value. Further, the specific surface area $BET_1$ of the first carbon matrix may be in a range from 1800 m²/g to 2000 m²/g, at this time, the first silicon-carbon composite particle has the better cycle stability, the silicon-carbon composite material as a whole has the better cycle stability, and the cycle performance of the battery is further improved.

Similarly, the specific surface area $BET_2$ of the second carbon matrix may be no less than 1600 m²/g, at this time, the second silicon-carbon composite particle has the better cycle stability, the silicon-carbon composite material as a whole has the better cycle stability, and the cycle performance of the battery is further improved. For example, the specific surface area $BET_2$ of the second carbon matrix may be 1600 m²/g, 1650 m²/g, 1700 m²/g, 1750 m²/g, 1800 m²/g, 1850 m²/g, 1900 m²/g, 2000 m²/g, 2100 m²/g, 2200 m²/g, or within a range from any one of the above numerical values to another numerical value. Preferably, the specific surface area $BET_2$ of the second carbon matrix may be in a range from 1600 m²/g to 1800 m²/g, at this time, the second silicon-carbon composite particle has the better cycle stability, the silicon-carbon composite material as a whole has the better cycle stability, and the cycle performance of the battery is further improved.

In some implementations, the specific surface area of the first carbon matrix is greater than the specific surface area of the second carbon matrix.

In some of the above-mentioned implementations, the mass percentage content of the silicon element in the first silicon-carbon composite particle is higher than that in the second silicon-carbon composite particle. The larger specific surface area of the first carbon matrix is conducive to the arrangement of the silicon-based material in the pore structure, so that the first silicon-carbon composite particle has the better cycle stability. The smaller specific surface area of the second carbon matrix is conducive to improving the structural stability of the second silicon-carbon composite particle. At this time, the overall cycle stability of the silicon-carbon composite material is better, further improving the cycle performance of the battery.

In some implementations, based on the silicon-carbon composite material, the mass content of the first silicon-carbon composite particle is $\leq 10\%$, optionally, 0.1% to 5%; and/or, based on the silicon-carbon composite material, the mass content of the second silicon-carbon composite particle is $\geq 80\%$, optionally, 80% to 99.8%.

In some of the above-mentioned implementations, the mass content of the first silicon-carbon composite particle does not exceed 10%. Due to the high silicon content, the volume expansion rate is large during the charge and discharge process. At this time, the overall cycle stability of the silicon-carbon composite particles is better, and the overall gram capacity of the silicon-carbon composite particles can be increased to a certain extent, thereby better ensuring the energy density and cycle performance of the battery. For example, the mass content of the first silicon-carbon composite particle may be 10%, 9%, 8%, 7%, 6%, 5%, 4%, 3%, 2%, 1%, 0.1%, or within a range from any one of the above numerical values to another numerical value. Further, the mass content of the first silicon-carbon composite particle may be in a range from 0.1% to 5%, at this time, the silicon-carbon composite material as a whole has the better cycle stability, and the cycle performance of the battery is further improved.

The mass content of the second silicon-carbon composite particle is no less than 80%, since its silicon content is relatively small, its volume expansion rate is small during the charge and discharge process, and it may be used as a main material of the silicon-carbon composite material, at the same time, it can also better adapt to the volume change of the first silicon-carbon composite particle, thereby improving the overall cycle stability of the silicon-carbon composite particle and further improving the cycle performance of the battery. For example, the mass content of the second silicon-carbon composite particle may be 80%, 81%, 82%, 83%, 84%, 85%, 86%, 87%, 88%, 89%, 90%, 91%, 92%, 93%, 94%, 95%, 96%, 97%, 98%, 99%, 99.8%, or within a range from any one of the above numerical values to another numerical value. Further, the mass content of the second silicon-carbon composite particle may be in a range from 80% to 99.8%, at this time, the silicon-carbon composite material as a whole has the better cycle stability, and the cycle performance of the battery is further improved.

In some implementations, at least a part of a surface of the first silicon-carbon composite particle and/or the second silicon-carbon composite particle has a coating layer.

In some implementations above, at least a part of the surface of the first silicon-carbon composite particle and/or the second silicon-carbon composite particle has the coating layer, the coating layer located on the surface may reduce the specific surface area of the carbon matrix, a side reaction with an electrolyte solution is reduced, and an initial efficiency and the cycle performance of the battery are further improved. It should be noted that carbon coating of the first silicon-carbon composite particles and/or the second silicon-carbon composite particles may reduce the mass percentage content of the silicon element in the first silicon-carbon composite particle to a certain extent, but the effect is small and does not produce a significant change in the mass percentage content of the silicon element in the silicon-carbon composite particle. Further, the coating layer is a carbon coating layer, and the carbon coating layer has good conductivity and stability and may not significantly affect the electrical properties of the silicon-carbon composite material.

In some implementations, the silicon-carbon composite material further includes a third silicon-carbon composite particle, the third silicon-carbon composite particle includes a third carbon matrix having a pore structure and a third silicon-based material arranged in the pore structure of the third carbon matrix, a mass percentage content of a silicon element in the third silicon-carbon composite particle is less than the mass percentage content of the silicon element in the first silicon-carbon composite particle, and the mass percentage content of the silicon element in the third silicon-carbon composite particle is less than the mass percentage content of the silicon element in the second silicon-carbon composite particle.

In some of the above-mentioned implementations, the silicon-carbon composite material also includes the third silicon-carbon composite particle, a mass percentage content of a silicon element in the third silicon-carbon composite particle is less than that of the first silicon-carbon composite particle and the second silicon-carbon composite particle, and thus its volume change rate during the charge and discharge process is smaller. In a mixed system of the silicon-carbon composite material, more space for the expansion of the silicon-carbon composite particle may be reserved, thereby alleviating the extrusion between the composite particles, further improving the overall cycle stability of the silicon-carbon composite material, and then improving the cycle performance and energy density of the battery.

In some implementations, the silicon-carbon composite material further includes the third silicon-carbon composite particle, the first silicon-carbon composite particle includes the third carbon matrix having the pore structure and the third silicon-based material arranged in the pore structure of the third carbon matrix, an average pore diameter of the pore structure in the third carbon matrix is less than the average pore diameter of the pore structure in the first carbon matrix, and the average pore diameter of the pore structure in the third carbon matrix is less than the average pore diameter of the pore structure in the second carbon matrix.

In some of the above-mentioned implementations, the average pore diameter of the pore structure in the third carbon matrix is less than the average pore diameters of the pore structures in the first carbon matrix and the second carbon matrix. The smaller average pore diameter can make the third carbon matrix have higher strength, the overall processability of the silicon-carbon composite material may be improved, the material is less likely to break during the production and processing process, and a compacted density of the negative electrode plate may be improved, thereby improving the energy density of the battery. In addition, the high strength and the small volume expansion rate may also improve the overall cycle stability of the silicon-carbon composite material and thus improve the cycle performance of the battery.

In some implementations, the silicon-carbon composite material further includes the third silicon-carbon composite particle, the first silicon-carbon composite particle includes the third carbon matrix having the pore structure and the third silicon-based material arranged in the pore structure of the third carbon matrix, a specific surface area of the third carbon matrix is less than the specific surface area of the first carbon matrix, and the specific surface area of the third carbon matrix is less than the specific surface area of the second carbon matrix.

In some of the above-mentioned implementations, the specific surface area of the third carbon matrix is less than the specific surface areas of the first carbon matrix and the second carbon matrix. Since the mass percentage content of the silicon element in the third silicon-carbon composite particle is relatively small compared with the first silicon-carbon composite particle and the second silicon-carbon composite particle, the specific surface area of the third carbon matrix may be appropriately reduced. The smaller specific surface area may increase the strength of the third silicon-carbon composite particle, thereby improving the processing performance of the silicon-carbon composite material, increasing the compacted density of the negative electrode plate, and helping to increase the energy density of the battery.

In some implementations, the mass percentage content of the silicon element in the third silicon-carbon composite particle is ≤25%, optionally, 20% to 25%. At this time, the third silicon-carbon composite particle has a smaller volume change rate during the charge and discharge process, which can further improve the overall cycle stability of the silicon-carbon composite material. For example, the mass percentage content of the silicon element in the third silicon-carbon composite particle may be 25%, 24%, 23%, 22%, 21%, 20%, 19%, 18%, 17%, 16%, 15%, 14%, 13%, 12%, 11%, 10%, or within a range from any one of the above numerical values to another numerical value. Further, the mass percentage content of the silicon element in the third silicon-carbon composite particle may be in a range from 20% to 25%, at this time, the overall gram capacity of the silicon-carbon composite material can be better ensured, and it is conducive to improving the energy density of the battery.

In some implementations, the pore structure in the third carbon matrix has the average pore diameter $d_3 \leq 4$ nm, optionally, 1 nm to 3 nm. At this time, the third silicon-carbon composite particle has a higher strength, which can make the silicon-carbon composite material as a whole have good processability, improve the compacted density of the negative electrode plate, and thus increase the energy density of the battery. At the same time, the smaller pore diameter is conducive to limiting the expansion of the volume of the third silicon-based material, so that the third silicon-carbon composite particle has good cycle stability, thereby improving the overall cycle stability of the silicon-carbon composite material and improving the cycle performance of the battery. For example, the average pore diameter $d_3$ of the pore structure in the third carbon matrix may be 4 nm, 3.5 nm, 3 nm, 2.5 nm, 2 nm, 1.5 nm, 1 nm, or within a range from any one of the above numerical values to another numerical value. Further, the average pore diameter of the pore structure in the third carbon matrix may be in a range from 1 nm to 3 nm, at this time, the energy density and the cycle performance of the battery may be further improved.

In some implementations, the third carbon matrix includes micropores having a pore diameter<2 nm, where a percentage p for which a pore volume of each micropore accounts of a total pore volume is ≥60%, optionally, 70% to 85%. Since the micropores may not significantly reduce the strength of the particles, the third silicon-carbon composite material has a higher strength while maintaining a higher porosity, which can alleviate cracking of the silicon-carbon negative electrode material during a cold pressing process, thereby improving the processability of the silicon-carbon composite material, which is beneficial to improving the energy density of the battery; and at the same time, most of the third silicon-based material is arranged in the micropores, which is conducive to reducing the volume change rate of the third silicon-carbon composite particle, thereby improving the cycle performance of the battery. For example, the percentage p for which the pore volume of each micropore in the third carbon matrix accounts of the total pore volume may be 60%, 65%, 70%, 75%, 80%, 85%, 90%, 95%, or within a range from any one of the above numerical values to another numerical value. Further, p may be in a range from 70% to 85%, at this time, the energy density and cycle performance of the battery may be further improved.

In some implementations, a powder compacted density of the third carbon matrix under a pressure of 49000N is in a range from 0.4 g/cm$^3$ to 1.1 g/cm$^3$, preferably, 0.4 g/cm$^3$ to 0.8 g/cm$^3$. At this time, the third silicon-carbon composite material has a higher strength, which can alleviate cracking of the silicon-carbon composite material during a cold pressing process, thereby improving the processability of the silicon-carbon composite material, which is beneficial to improving the energy density of the battery. For example, the powder compacted density of the third carbon matrix under a pressure of 49000N may be 0.4 g/cm$^3$, 0.5 g/cm$^3$, 0.6 g/cm$^3$, 0.7 g/cm$^3$, 0.8 g/cm$^3$, 0.9 g/cm$^3$, 1 g/cm$^3$, 1.1 g/cm$^3$, or within a range from any one of the above numerical values to another numerical value. Further, the powder compacted density of the third carbon matrix under a pressure 49000N is in a range from 0.4 g/cm$^3$ to 0.8 g/cm$^3$, at this time, the energy density of the battery may be further improved.

In some implementations, the third carbon matrix has the specific surface area BET$_3$≥1000 m$^2$/g, preferably, 1000 m$^2$/g to 1300 m$^2$/g. At this time, the pore structure of the third carbon matrix may accommodate more third silicon particles, the third silicon-based material in the pore structure has better stability, so the third silicon-carbon composite particle has better cycle stability, the overall cycle stability of the silicon-carbon composite material may be further improved, and the cycle performance of the battery is further improved. For example, the specific surface area BET$_3$ of the third carbon matrix may be 1000 m$^2$/g, 1050 m$^2$/g, 1100 m$^2$/g, 1150 m$^2$/g, 1200 m$^2$/g, 1250 m$^2$/g, 1300 m$^2$/g, 1400 m$^2$/g, 1500 m$^2$/g, 1600 m$^2$/g, or within a range from any one of the above numerical values to another numerical value. The specific surface area BET$_3$ of the third carbon matrix may be in a range from 1000 m$^2$/g to 1300 m$^2$/g, at this time, the third silicon-carbon composite particle has better processibility, and the energy density of the battery may be improved.

In some implementations, at least one of the first silicon-based material, the second silicon-based material, or the third silicon-based material includes silicon grains. Since the silicon grains have a higher gram capacity in the silicon-based material, the silicon-carbon composite material as a whole has a higher gram capacity, which can further improve the energy density of the battery. In addition, since the silicon grains are arranged in the pore structure of the carbon matrix, the volume expansion of the silicon grains may be effectively limited, so that the silicon grains may not significantly affect the overall cycle stability of the silicon-carbon composite material. Further, a grain size of the silicon grains is less than or equal to 10 nm, as the smaller the grain size of the silicon grains is, the smaller anisotropy of the silicon grains is, at this time, the volume expansion rate of the silicon grains with charge and discharge is lower, so the first silicon-carbon composite particle, the second silicon-carbon composite particle or the third silicon-carbon composite particle has better cycle stability, the overall cycle stability of the silicon-carbon composite material may be further improved, and the cycle performance of the battery is further improved. For example, the grain size of the silicon grains may be 1 nm, 2 nm, 3 nm, 4 nm, 5 nm, 6 nm, 7 nm, 8 nm, 9 nm, 10 nm, or within a range from any one of the above numerical values to another numerical value.

In some implementations above, at least a part of the surface of the third silicon-carbon composite particle has a coating layer, the coating layer located on the surface may reduce the specific surface area of the carbon matrix, a side reaction with an electrolyte solution is reduced, and the initial efficiency and the cycle performance of the battery are further improved. It should be noted that carbon coating of the third silicon-carbon composite particle may reduce the mass percentage content of the silicon element in the first silicon-carbon composite particle to a certain extent, but the effect is small and does not produce a significant change in the mass percentage content of the silicon element in the silicon-carbon composite particle. Further, the coating layer is a carbon coating layer, and the carbon coating layer has good conductivity and stability and may not significantly affect the electrical properties of the silicon-carbon composite material.

In some implementations, the specific surface area of the silicon-carbon composite material is $\leq 6$ m$^2$/g. Since silicon particles easily react with the electrolyte solution to form a solid electrolyte membrane, which may consume active ions in the electrolyte solution. At the same time, the volume expansion of silicon particles may damage the solid electrolyte membrane, and then a further reaction with the electrolyte solution may occur. The specific surface area of the silicon-carbon composite material is controlled to be no more than 6m$^2$/g. At this time, a contact area between the silicon-carbon composite material and the electrolyte solution in the battery is smaller, which reduces the loss of active ions, reduces the side reaction, and can further improve the initial efficiency and cycle performance of the battery. For example, the specific surface area of the silicon-carbon composite material may be 1 m$^2$/g, 2 m$^2$/g, 3 m$^2$/g, 4 m$^2$/g, 5 m$^2$/g, 6 m$^2$/g, or within a range from any one of the above numerical values to another numerical value. Further, the specific surface area of the silicon-carbon composite material is $\leq 4$ m$^2$/g, at this time, the initial efficiency and cycle performance of the battery are better.

In some implementations, the volume average particle diameter Dv50 of the silicon-carbon composite material is in a range from 5 $\mu$m to 15 $\mu$m. As the particle diameter of the silicon-carbon composite material may affect deintercalation/intercalation of the active ions, there is a certain impact on the specific surface area. the volume average particle diameter Dv50 of the silicon-carbon composite material is controlled to be in a range from 5 $\mu$m to 15 $\mu$m, at this time, the silicon-carbon composite material is more conducive to de-intercalation/intercalation of the active ions, dynamic performance is better, and the cycle performance of the battery may be further improved. For example, Dv50 of the silicon-carbon composite material may be 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, 15 $\mu$m, or within a range from any one of the above numerical values to another numerical value. Further, Dv50 of the silicon-carbon composite material is in a range from 5 $\mu$m to 10 $\mu$m, at this time, the cycle performance of the battery is better.

In some implementations, the mass percentage content of the silicon element in the silicon-carbon composite material is in a range from 35% to 50%. Generally speaking, the higher the silicon content is, the greater the gram capacity of the silicon-carbon composite material is, and the worse the corresponding cycle stability is. The mass percentage content of the silicon element in the silicon-carbon composite material is controlled to be in a range from 35% to 50%, at this time, both the gram capacity and the cycle stability of the silicon-carbon composite material can be better ensured, and the energy density and cycle performance of the battery are further improved. For example, the mass percentage content of the silicon element in the silicon-carbon composite material may be 35%, 36%, 37%, 38%, 39%, 40%, 41%, 42%, 43%, 44%, 45%, 46%, 47%, 48%, 49%, 50%, or within a range from any one of the above numerical values to another numerical value. Further, the mass percentage content of the silicon element in the silicon-carbon composite material is in a range from 40% to 50%, at this time, the energy density and cycle performance of the battery are better.

In some implementations, the porosity of the silicon-carbon composite material is in a range from 45% to 65%. Since silicon particles expand greatly during the cycle process, in order to reduce the volume expansion rate of the negative electrode plate during the cycle process and improve the cycle stability of the silicon-carbon composite material, the silicon-carbon composite material should have a suitable porosity to reserve space for the expansion of the silicon particles and relieve a stress inside the silicon-carbon composite material caused by silicon expansion, thereby improving the cycle performance of the battery; and in addition, the suitable porosity may increase the compacted density of the negative electrode plate and improve the energy density of the battery. For example, the porosity of the silicon-carbon composite material may be 45%, 47%, 49%, 50%, 52%, 54%, 55%, 56%, 58%, 60%, 62%, 64%, 65%, or within a range from any one of the above numerical values to another numerical value. Further, the porosity of the silicon-carbon composite material may be in a range from 45% to 55%, at this time, the energy density and cycle performance of the battery are better.

In some implementations, the powder compacted density of the silicon-carbon composite material under a pressure of 49000N is in a range from 0.8 g/cm$^3$ to 1.2 g/cm$^3$, optionally, 0.9 g/cm$^3$ to 1.1 g/cm$^3$. At this time, the silicon-carbon composite material has the better processability, which is conducive to improving the compacted density of the negative electrode plate, so the energy density of the battery is higher. For example, the powder compacted density of the silicon-carbon composite material under a pressure 49000N may be 0.8 g/cm$^3$, 0.85 g/cm$^3$, 0.9 g/cm$^3$, 0.95 g/cm$^3$, 1.00 g/cm$^3$, 1.05 g/cm$^3$, 1.1 g/cm$^3$, 1.15 g/cm$^3$, 1.2 g/cm$^3$, or within a range from any one of the above numerical values to another numerical value. Further, the powder compacted density of the silicon-carbon composite material under a pressure of 49000N may be in a range from 0.9 g/cm$^3$ to 1.1 g/cm$^3$, at this time, the energy density of the battery may be further improved.

In some implementations, the tap density of the silicon-carbon composite material is in a range from 0.6 g/cm$^3$ to 1.0 g/cm$^3$, optionally, 0.7 g/cm$^3$ to 0.9 g/cm$^3$. At this time, the silicon-carbon composite material has the better processability, which is conducive to improving the compacted density of the negative electrode plate, so the energy density of the battery is higher. For example, the tap density of the silicon-carbon composite material may be 0.6 g/cm$^3$, 0.65 g/cm$^3$, 0.7 g/cm$^3$, 0.75 g/cm$^3$, 0.8 g/cm$^3$, 0.85 g/cm$^3$, 0.9 g/cm$^3$, 0.95 g/cm$^3$, 1 g/cm$^3$, or within a range from any one of the above numerical values to another numerical value. Further, the tap density of the silicon-carbon composite material may be in a range from 0.7 g/cm$^3$ to 0.9 g/cm$^3$, at this time, the energy density of the battery may be further improved.

In some implementations, a powder resistivity of the silicon-carbon composite material is $\leq 5$ $\Omega\cdot$cm. At this time, the silicon-carbon composite material has the better conductivity, thereby fully utilizing the gram capacity of the silicon-carbon composite material and further improving the energy density and cycle performance of the battery. For example, the powder resistivity of the silicon-carbon composite material may be 5 $\Omega\cdot$cm, 4.5 $\Omega\cdot$cm, 4 $\Omega\cdot$cm, 3.5 $\Omega\cdot$cm, 3 $\Omega\cdot$cm, 2.5 $\Omega\cdot$cm, 2 $\Omega\cdot$cm, 1.5 $\Omega\cdot$cm, 1 $\Omega\cdot$cm, 0.5 $\Omega\cdot$cm, or within a range from any one of the above numerical values to another numerical value. Further, the powder resistivity of the silicon-carbon composite material may be $\leq 3$ $\Omega\cdot$cm, at this time, the energy density and cycle performance of the battery are better.

In some implementations, the silicon-carbon composite material satisfies (Dv90-Dv10)/Dv50$\leq 5$. At this time, a particle diameter distribution of the silicon-carbon composite material is within a narrow range, which may increase the porosity of the negative electrode film layer in the negative electrode plate, thereby alleviating the extrusion of the silicon-carbon composite material during the charge and discharge process and improving the cycle performance of the battery. For example, (Dv90-Dv10)/Dv50 of the silicon-carbon composite material may be 5, 4, 3, 2, 1, or within a range from any one of the above numerical values to another numerical value. Further, (Dv90-Dv10)/Dv50 of the silicon-carbon composite material may be $\leq 3$, at this time, the cycle performance of the battery is better.

In the context of the present application, the mass percentage contents of the first silicon-carbon composite particle, the second silicon-carbon composite particle and the third silicon-carbon composite particle in the silicon-carbon composite material have meanings well known in the art and may be tested by known methods.

The grain size of the silicon grains has a meaning well known in the art and may be tested by known methods. For example, according to the JIS/K0131-1996 test standard, an XRD pattern of a sample is tested. According to the XRD pattern of the sample, a peak width $\beta$ at half height and a diffraction angle $\theta$ of an Si (111) crystal plane are respectively taken and substituted into the Debye-Scherrer formula to calculate the grain size of the silicon particles.

$$\text{Debye-Scherrer formula: } Dhkl = k\lambda/\beta\cos\theta;$$

Dhkl-grain size, unit: nm; k-Scherrer constant, 0.89; $\lambda$-incident X-ray wavelength, 0.15406nm; $\beta$--peak width at half height of a diffraction peak, unit: rad; $\theta$-diffraction angle, unit: degree.

The specific surface areas of the first carbon matrix, the second carbon matrix, the third carbon matrix and the silicon-carbon composite material have meanings well known in the art and may be tested by known methods. For example, the specific surface area is tested by using a gas adsorption method, and according to the test standard of GB/T19587-2017, the test is performed as follows: a to-be-tested object is used as a sample, a sample tube is immersed in -196°C liquid nitrogen, an adsorption amount of nitrogen on a solid surface under different pressures is measured under a relative pressure of 0.05-0.30, an adsorption amount for a monomolecular layer of the sample is obtained based on a BET multilayer adsorption theory and a formula thereof, and then the specific surface area of the solid is calculated.

The average pore diameter of the carbon matrix, the pore volume of each micropore and the percentage for which the pore volume of each micropore accounts of the total pore volume have meanings well known in the art and may be tested by known methods. For example, the pore diameter is tested by the gas adsorption method, and according to the test standard of GB/T19587-2017 & GB/T21650.2-2008, the test is performed as follows: a porous material sample tube is immersed in -196°C liquid nitrogen, the nitrogen is adsorbed on a to-be-tested material under a relative pressure of 0-1, a pore diameter distribution of the porous material is characterized based on a relational graph between a volume of each pore diameter (i.e., pore volume) and a corresponding partial pressure, and the average pore diameter of the carbon substrate is obtained.

Dv90, Dv50 and Dv10 of the silicon-carbon composite material have meanings well known in the art, namely, corresponding particle diameters when a cumulative particle size distribution on a volume basis reaches 90%, 50% and 10%, respectively, and may be tested by known methods. For example, a laser diffraction particle size distribution analyzer (Malvern Mastersizer 3000) is used for obtaining Dv90, Dv50 and Dv10 by measuring the particle size distribution according to a particle size analysis-laser diffraction method GB/T19077-2016.

The mass percentage contents of the silicon elements in the first silicon-carbon composite particle, the second silicon-carbon composite particle, the third silicon-carbon composite particle and the silicon-carbon composite material have meanings well known in the art and may be tested by known methods. For example, the mass percentage content of the silicon element is measured by using emission spectroscopy testing (Inductively coupled plasma (ICP)), specifically as follows: a to-be-tested material is used as a sample, the sample is digested with aqua regia and hydrofluoric acid HF, a silicon content of the solution after digestion is tested, and the mass percentage content of the silicon element in the silicon-carbon composite material is calculated.

The porosity of the silicon-carbon composite material has a meaning well known in the art and may be tested by known methods. For example, the test is performed according to the GB/T24586 test standard, the porosity $P=(V2-V1)/V2*100\%$, the apparent volume $V2=S*H*A$, where: S is the area, unit: $cm^2$; H is the thickness, unit: cm; A is the number of samples, unit: EA; V1 is the true volume of the sample, unit: $cm^3$; V2 is the apparent volume of the sample, unit: $cm^3$; where the true volume V1 of the sample is calculated as follows: placing the above sample in a true density tester (Accu Pyc II 1340 analyzer), closing the test system, and feeding helium according to the procedure. By testing a gas pressure in a sample chamber and an expansion chamber, and then according to an ideal gas state equation ($v=nRT/P$), gas volumes of the sample chamber and the expansion chamber are obtained respectively, thereby obtaining the gas volume discharged by the sample under certain temperature and pressure conditions, which is the true volume V1 of the sample.

The powder resistivity of the silicon-carbon composite material has a meaning well known in the art and may be tested by known methods. For example, a four-probe method is used, specifically referring to GB/T30835-1994, and a powder resistivity tester (ST2722-SZ) is used for measurement: a certain amount of sample powder to be tested is placed in a special mold, and different pressures are set to obtain the powder resistivity under a certain pressure. In the present application, the pressure may be 16 MPa.

The powder compacted densities of the third carbon matrix and the silicon-carbon composite material under different pressures have meanings well known in the art and may be tested by known methods in the art. For example, according to GB/T 24533-2009, an electronic pressure testing machine (such as UTM7305) may be used for testing: a specific amount of powder is placed in a special compaction mold, different pressures are set, powder thicknesses under the different pressures are read on a device, and the compacted densities under the different pressures are calculated. In the present application, the pressure may be 49000N.

The tap density of the silicon-carbon composite material has a meaning well known in the art, and the powder compacted density may be tested by known methods in the art. For example, according to GB/T 5162-2006, a powder tap density tester may be used for testing. A tester BT-301 from Dandong Bettersize Instruments Ltd. may be used, test parameters are as follows: vibration frequency: 250 ± 15 times/minute, amplitude: 3 ± 0.2 mm, number of vibrations: 5,000 times, and a measuring cylinder: 25 mL.

In some implementations, the first silicon-carbon composite particle may be prepared by the following method: in 350-800°C, a silicon source gas and a protective gas with a gas flow ratio of 1:(1-6) are used for vapor deposition on the first carbon matrix for 8-15 hours, so that the first silicon-based material is deposited in the pore structure of the first carbon matrix to obtain the first silicon-carbon composite particle.

It should be noted that the first silicon-carbon composite particles with different specifications may be obtained by adjusting the gas flow ratio, deposition temperature and deposition time within the above ranges and using different first carbon matrices. In addition, the first silicon-carbon composite particles are not limited to being prepared by the above method, and other known methods and conditions may also be used to obtain the first carbon-silicon composite particle.

In some implementations, the second silicon-carbon composite particle may be prepared by the following method: in 350-800°C, a silicon source gas and a protective gas with a gas flow ratio of 1:(1-6) are used for vapor deposition on the second carbon matrix for 6-12 hours, so that the second silicon-based material is deposited in the pore structure of the second carbon matrix to obtain the second silicon-carbon composite particle.

It should be noted that the second silicon-carbon composite particles with different specifications may be obtained by adjusting the gas flow ratio, deposition temperature and deposition time within the above ranges and using different second carbon matrices. In addition, the second silicon-carbon composite particle is not limited to being prepared by the above method, and other known methods and conditions may also be used to obtain the second carbon-silicon composite particle.

In some implementations, the third silicon-carbon composite particle may be prepared by the following method: in 350-800°C, a silicon source gas and a protective gas with a gas flow ratio of 1:(1-6) are used for vapor deposition on the third carbon matrix for 3-7 hours, so that the third silicon-based material is deposited in the pore structure of the third carbon matrix to obtain the third silicon-carbon composite particle.

It should be noted that the third silicon-carbon composite particles with different specifications may be obtained by adjusting the gas flow ratio, deposition temperature and deposition time within the above ranges and using different third carbon matrices. The third silicon-carbon composite particle is not limited to being prepared by the above method, and other known methods and conditions may also be used to obtain the third carbon-silicon composite particle.

In some implementations, the carbon coating layer on the surface of the first silicon-carbon composite particle, the second silicon-carbon composite particle or the third silicon-carbon composite particle may be prepared by the following method: in 400-800°C, a carbon source gas and a protective gas with a gas flow ratio of 1:(1.5-10) are used for vapor deposition for 0.2-2 hours on the carbon matrix where the silicon-based material is deposited, so that the carbon coating layer is deposited on a surface of the carbon matrix where the silicon-based material is deposited.

It should be noted that the carbon coating layer is not limited to being prepared by the above method, and other known methods and conditions may also be used to obtain the carbon coating layer.

In some implementations, the silicon source gas includes, but not limited to, at least one of silane-containing hydrocarbons such as silane, dichlorosilane, trichlorosilane, and tetrachlorosilane.

In some implementations, the protective gas includes, but not limited to, at least one of nitrogen, argon or hydrogen.

In some implementations, the carbon source gas includes, but not limited to, at least one of hydrocarbon gases such as methane, ethylene or acetylene.

In some implementations, the silicon-carbon composite material may be obtained by the following method: mixing the first silicon-carbon composite particle, the second silicon-carbon composite particle, and the third silicon-carbon composite particle according to a certain mass ratio to obtain the silicon-carbon composite material.

It can be understood that the silicon-carbon composite materials with different specifications may be obtained by adjusting types and mass ratios of the first silicon-carbon composite particle, the second silicon-carbon composite particle and the third silicon-carbon composite particle.

In some implementations, the negative electrode active material may further include graphite.

Secondary battery

In a second aspect, the present application provides a secondary battery, including a negative electrode plate, the negative electrode plate includes a negative electrode current collector and a negative electrode film layer, the negative electrode film layer includes a negative electrode active material, and the negative electrode active material includes the negative electrode active material described in any one of implementations in the first aspect.

According to the present application, the negative electrode plate in the battery includes the negative electrode active material described in any one of implementations in the first aspect, so the secondary battery has the beneficial effects of the first aspect.

[Negative electrode plate]

As an example, the negative electrode current collector has two opposite surfaces in its own thickness direction, and the negative electrode film layer is arranged on either or both of two opposite surfaces of the negative electrode current collector.

In some embodiments, the negative electrode current collector can be a metal foil or a composite current collector. For example, as the metal foil, a copper foil can be used. The composite current collector may include a polymer base layer and a metal layer formed on at least one surface of the polymer substrate. The composite current collector may be formed by forming a metal material (copper, a copper alloy, nickel, a nickel alloy, titanium, a titanium alloy, silver, a silver alloy, or the like) on a high molecular material substrate (a substrate such as polypropylene (PP), polyethylene terephthalate (PET), polybutylene terephthalate (PBT), polystyrene (PS), and polyethylene (PE)).

In some implementations, the negative electrode film layer further optionally includes a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally comprises other adjuvants, for example, a thickener (such as sodium carboxymethyl cellulose (CMC-Na)).

In some implementations, the negative electrode plate may be prepared by the following method: the above components, such as the negative electrode active material, the conductive agent, the binder, and any other component, for preparing the negative electrode plate are dispersed in a solvent (such as deionized water) to form a negative electrode slurry; and the negative electrode slurry is coated on the negative electrode current collector, and after drying, cold pressing and other procedures, the negative electrode plate is obtained.

Generally, the battery further includes a positive electrode plate, an electrolyte and a separator. During the charge and discharge process of the battery, the active ions are intercalated and de-intercalated back and forth between the positive electrode plate and the negative electrode plate. The electrolyte plays a role in conducting ions between the positive electrode plate and negative electrode plate. The separator is arranged between the positive electrode plate and the negative electrode plate and mainly functions to prevent the positive and negative electrodes from short-circuiting while enabling ions to pass through.

[Positive electrode plate]

A positive electrode plate comprises a positive electrode current collector and a positive electrode film layer arranged on at least one surface of the positive electrode current collector, where the positive electrode film layer comprises a positive electrode active material.

As an example, the positive electrode current collector has two opposite surfaces in its own thickness direction, and the positive electrode film layer is arranged on either or both of the opposite surfaces of the positive electrode current collector.

In some embodiments, the positive electrode current collector can be a metal foil or a composite current collector. For example, as the metal foil, an aluminum foil can be used. The composite current collector may include a polymer base layer and a metal layer formed on at least one surface of the polymer base layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode active material may be a positive electrode active material for batteries well known in the art. As an example, the positive electrode active material may comprise at least one of the following materials: a lithium-comprising phosphate of olivine structure, a lithium transition metal oxide, and a respective modified compound thereof. However, the present application is not limited to these materials, and other conventional materials that can be used as positive-electrode active materials for batteries may also be used. Only a single one of or a combination of two or more of these positive electrode active materials can be used. Examples of lithium transition metal oxides may include, but are not limited to, at least one of a lithium-cobalt oxide (such as $LiCoO_2$), a lithium-nickel oxide (such as $LiNiO_2$), a lithium-manganese oxide (such as $LiMnO_2$ or $LiMn_2O_4$), a lithium-nickel-cobalt oxide, a lithium-manganese-cobalt oxide, a lithium-nickel-manganese oxide, a lithium-nickel-cobalt-manganese oxide (such as Li-$Ni_{1/3}Co_{1/3}Mn_{1/3}O_2$ (also abbreviated as $NCM_{333}$), $LiNi_{0.5}Co_{0.2}Mn_{0.3}O_2$ (also abbreviated as $NCM_{523}$), $LiNi_{0.5}Co_{0.25}Mn_{0.25}O_2$ (also abbreviated as $NCM_{211}$), $LiNi_{0.6}Co_{0.2}Mn_{0.2}O_2$ (also abbreviated as $NCM_{622}$), $LiNi_{0.8}Co_{0.1}Mn_{0.1}O_2$ (also abbreviated as $NCM_{811}$)), a lithium-nickel-cobalt-aluminum oxide (such as $LiNi_{0.85}Co_{0.15}Al_{0.05}O_2$), and a modified compound thereof. Examples of lithium-containing phosphates of olivine structure may comprise, but are not limited to, at least one of lithium iron phosphate (e.g., $LiFePO_4$ (also abbreviated as LFP)), lithium iron phosphate and carbon composites, lithium manganese phosphate (e.g., $LiMnPO_4$), lithium manganese phosphate and carbon composites, lithium iron manganese phosphate, and lithium iron manganese phosphate and carbon composites.

In some embodiments, the positive electrode film layer further optionally comprises a binder. As an example, the binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode film layer further optionally comprises a conductive agent. As an example, the conductive agent may comprise at least one of superconducting carbon, acetylene black, carbon black, Ketjen black, carbon dot, carbon nanotube, graphene, and carbon nanofiber.

In some implementations, the positive electrode plate may be prepared by the following method: the above components, such as the positive electrode active material, the conductive agent, the binder and any other components for preparing the positive electrode plate are dispersed in a solvent (e.g., N-methyl pyrrolidone) to form a positive electrode slurry; and the positive electrode slurry is coated on a positive electrode current collector, and after drying, cold pressing and other procedures, the positive electrode plate is obtained.

[Electrolyte]

The electrolyte plays a role in conducting ions between the positive electrode plate and negative electrode plate. Types of the electrolyte are not specifically limited in the present application, and may be selected as required. For example, the electrolyte may be in a liquid state, a gel state, or an all-solid state.

In some embodiments, an electrolyte solution is used as the electrolyte. The electrolyte solution contains an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally comprises an additive. For example, the additive may include a negative electrode film-forming additive or a positive electrode film-forming additive, or may further include an additive that can improve some performance of the battery, such as an additive that improves overcharge performance of the battery or an additive that improves high-temperature or low-temperature performance of the battery.

[Separator]

In some embodiments, the battery cell also includes a separator. A type of the separator is not particularly limited in the present application, and any well-known separator having good chemical stability, mechanical stability, and a porous structure may be selected.

In some embodiments, the material of the separator can be selected from at least one of glass fibers, non-woven fabric, polyethylene, polypropylene, and polyvinylidene fluoride. The separator can be either a single-layer thin film or a multilayer composite thin film without special limitations. When the separator is a multilayer composite thin film, the materials of the layers can be the same or different without special limitations.

In some implementations, the positive electrode plate, the negative electrode plate, and the separator may be made to form an electrode assembly by a winding process or a stacking process.

In some implementations, the secondary battery may include a battery cell, and the battery cell includes the above electrode assembly.

In some implementations, the battery cell may include an outer package. The outer package can be used for encapsulating the above-mentioned electrode assembly and electrolyte solution.

In some embodiments, the outer package of the battery cell may be a hard shell, such as a hard plastic shell, an aluminum shell, and a steel shell. The outer package of the battery cell may also be a soft bag, such as a pouch-type soft bag. The material of the soft bag may be a plastic, and examples of the plastic may include polypropylene, polybutylene terephthalate, polybutylene succinate, and the like.

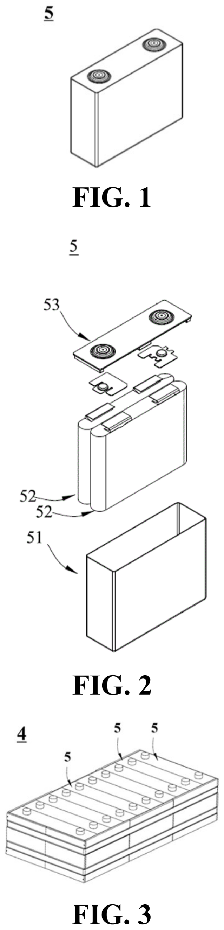

A shape of the battery cell is not particularly limited in the present application, and may be a cylinder, a square, or any other shape. For example, FIG. 1 shows an example of a battery cell 5 having a square structure.

In some implementations, referring to FIG. 2, the outer package may include a case 51 and a cover plate 53. The case 51 may include a bottom plate and a side plate connected to the bottom plate, which enclose to form an accommodating cavity. The case 51 has an opening that communicates with the accommodating cavity, and the cover plate 53 may cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 included in the battery cell 5 may be one or more, which may be selected by those skilled in the art according to specific actual requirements.

In some implementations, the secondary battery may further include a box, and the battery cell is accommodated in the box.

The number of battery cells included in the above battery may be one or more, which may be selected by those skilled in the art according to the application and capacity of the battery.

Further, in the above secondary battery, a plurality of battery cells exist in the form of a battery module assembled therefrom. FIG. 3 is an example of a battery module 4. Referring to FIG. 3, in the battery module 4, a plurality of battery cells 5 may be arranged sequentially along a length direction of the battery module 4, or, of course, may be arranged in any other manner. The plurality of battery cells 5 may further be fixed by fasteners.

Optionally, the battery module 4 may further include a housing having an accommodating space, and the plurality of battery cells 5 are accommodated in the accommodating space.

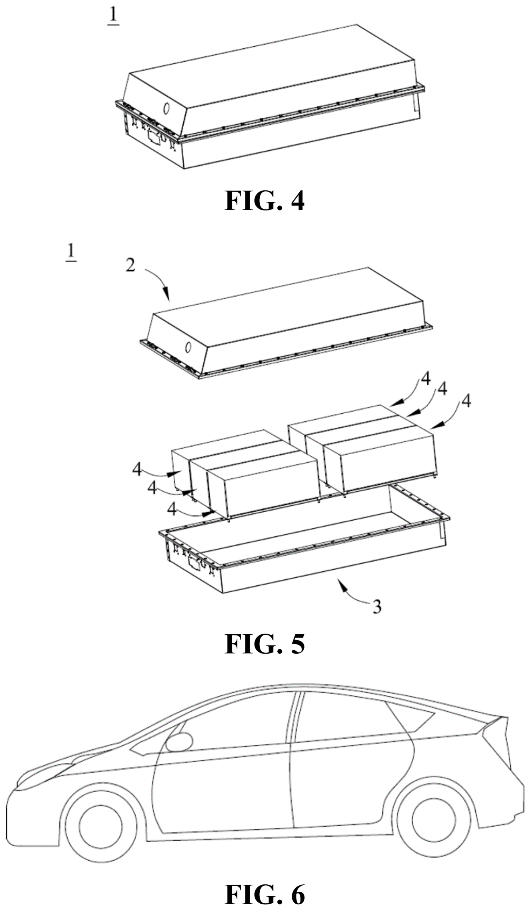

FIG. 4 and FIG. 5 are examples of a secondary battery 1. Referring to FIG. 4 and FIG. 5, the secondary battery 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

Electrical apparatus

In a fifth aspect, the present application further provides an electrical apparatus, including the secondary battery described in any one of implementations in the second aspect.

The battery may be used as a power supply of the electrical apparatus, or may be used as an energy storage unit of the electrical apparatus. The electrical apparatus may include, but not limited to, a mobile device (e.g., a mobile phone or a laptop), an electric vehicle (e.g., an all-electric vehicle, a hybrid electric vehicle, a plug-in hybrid electric vehicle, an electric bicycle, an electric scooter, an electric golf cart, or an electric truck), an electric train, a ship, a satellite, an energy storage system, etc.

The secondary battery may be selected based on use demands of the electrical apparatus.

FIG. 6 is an example of an electrical apparatus. The electrical apparatus is an all-electric vehicle, a hybrid electric vehicle, or a plug-in hybrid electric vehicle, etc.

As another example, the apparatus may be a mobile phone, a tablet computer, a laptop, etc. The apparatus is generally required to be light and thin, so a battery including only the battery cell may be used as a power supply.

Example

Examples of the present application will be described below. The Examples described below are illustrative and only used to explain the present application, and cannot be construed as limiting the present application. In Examples in which no specific technologies or conditions are specified, technologies or conditions described in the literature in the art or product specifications are followed. The agents or instruments used herein without specified manufacturer are conventional commercially-available products.

Preparation Example 1-1:

Hard carbon is used as a carbon matrix, wherein a pore volume of micropores of the hard carbon matrix is 0.72 $cm^3/g$, an average pore diameter is 3.2 nm, and a specific surface area is 1870 $m^2/g$.

Vapor deposition is performed on the hard carbon matrix in 455°C for 10 hours by using silane and nitrogen with a gas flow ratio of 1:5; and then in 660°C, ethylene and nitrogen with a gas flow ratio of 1:2 are used for vapor deposition on the hard carbon matrix for 0.5 hour to form a carbon coating layer, thereby obtaining the silicon-carbon composite particle with a silicon content of 55%.

The corresponding silicon-carbon composite particles are obtained by controlling the type of carbon matrix, gas flow ratio, deposition temperature and deposition time.

The carbon matrix parameters and deposition processes of Preparation Examples 1-2, 2-1, and 2-2 are detailed in Table 1.

Table 1

| | Hard carbon matrix | | | Silicon deposition process | | | Silicon-carbon composite particle | | |
|---|---|---|---|---|---|---|---|---|---|
| | BET ($m^2/g$) | Average pore diameter (nm) | Pore volume ($cm^3/g$) of micropore | Deposition temperature (°C) | Deposition time (h) | Gas flow ratio | BET ($m^2/g$) | Grain size (nm) of silicon grain | Mass percentage content (%) of silicon element |
| Preparation Example 1-1 | 1870 | 3.2 | 0.68 | 475 | 10 | 1:5 | 2.1 | 2.8 | 55 |
| Preparation Example 1-2 | 1951 | 3.1 | 0.72 | 475 | 14 | 1:5 | 2.6 | 2.7 | 62 |
| Preparation Example 2-1 | 1720 | 4.1 | 0.65 | 460 | 9 | 1:4.5 | 2 | 3.1 | 46 |
| Preparation Example 2-2 | 1603 | 4.8 | 0.6 | 460 | 7.5 | 1:4.5 | 1.9 | 3.3 | 35 |

Preparation Example 3-1:

Hard carbon is used as a carbon matrix, wherein the hard carbon matrix has a specific surface area of 1200 $m^2/g$, an average pore diameter of 2.1 nm, a porosity of 82%, and a compacted density of 0.61 $g/cm^3$ tested under a pressure of 49000N.

Vapor deposition is performed on the hard carbon matrix in 465°C for 3.5 hours by using silane and nitrogen with a gas flow ratio of 1:6; and then in 660°C, ethylene and nitrogen with a gas flow ratio of 1:2 are used for vapor deposition on the first carbon matrix for 0.5 hour to form a carbon coating layer, thereby obtaining the silicon-carbon composite particle with a silicon content of 25%.

The silicon-carbon composite particles with different specifications are obtained by controlling the type of carbon matrix, gas flow ratio, deposition temperature and deposition time.

The carbon matrix parameters and deposition processes of Preparation Example 3-2 are detailed in Table 2 of Example.

Table 2

| | Hard carbon matrix | | | | Silicon deposition process | | | Silicon-carbon composite particle | | |
|---|---|---|---|---|---|---|---|---|---|---|
| | BET (m²/g) | Average pore diameter (nm) | p(%) | Compacted density (g/cm³) under 49000N | Deposition temperature (°C) | Deposition time (h) | Gas flow ratio | BET (m²/g) | Grain size (nm) of silicon grain | Mass percentage content (%) of silicon element |
| Preparation Example 3-1 | 1200 | 2.1 | 82 | 0.61 | 465 | 3.5 | 1:6 | 4.3 | 1.7 | 25 |
| Preparation Example 3-2 | 1000 | 1.8 | 75 | 0.58 | 465 | 2 | 1:6 | 4.8 | 1.7 | 15 |

Example 1

1) Preparation of a negative electrode plate

A silicon-carbon composite particle (silicon-carbon composite particles in Preparation Example 1-1 and Preparation Example 2-1 are mixed according to a mass ratio of 5:95), artificial graphite, conductive carbon black, a binder (styrene-butadiene rubber (SBR)), a thickener (sodium carboxymethyl cellulose (CMC-Na)) according to a mass ratio of 20:75:2:2:1 are fully stirred and uniformly mixed in a solvent system (deionized water) to obtain a negative electrode slurry; the negative electrode slurry is uniformly coated on a negative electrode current collector (copper foil); and then after drying, cold pressing, and cutting, the negative electrode plate is obtained.

2) Preparation of a positive electrode plate

A positive electrode active material ($Li(Ni_{0.8}Co_{0.1}Mn_{0.1})O_2$), conductive carbon black and a binder (polyvinylidene fluoride (PVDF)) are fully stirred and uniformly mixed in a solvent system (N-methylpyrrolidone (NMP)) according to a mass ratio of 96:2:2 to obtain a positive electrode slurry; the positive electrode slurry is evenly coated on a positive electrode current collector (aluminum foil); and then after drying, cold pressing and cutting, the positive electrode plate is obtained.

3) Preparation of an electrolyte solution

In a glove box under an argon atmosphere ($H_2O$ content<0.1 ppm, and $O_2$ content<0.1 ppm), a lithium salt (lithium hexafluorophosphate $LiPF_6$) is dissolved in an organic solvent ethylene carbonate (EC) and diethyl carbonate (DEC) mixed system (a volume ratio of EC to DEC is 3:7) to be uniformly stirred so as to obtain an electrolyte with a lithium salt concentration of 1 mol/L. Then FEC is added, where a content of FEC is 5% of a total mass of the electrolyte solution.

4) Separator

A polypropene (PP) film is used as the separator.

5) Preparation of a battery

The positive electrode plate, the separator, and the composite negative electrode plate are stacked in order, so that the separator is positioned between the positive electrode plate and the negative electrode plate to play a role in isolating the positive electrode plate from the negative electrode plate; then winding is performed to obtain an electrode assembly; the electrode assembly is put in an outer package, and the electrolyte solution is injected immediately; and after standing, cold pressing, formation, shaping and other procedures to obtain a lithium-ion secondary battery.

Example 2 to Example 9

The preparation method is similar to that of Example 1, except that different mass percentage contents and different types of silicon-carbon composite particles are mixed to obtain the silicon-carbon composite material. The specific parameters are shown in Table 3.

Comparative Example 1

The preparation method is similar to that of Example 1, except that only the silicon-carbon composite particle in Preparation Example 2-1 is used as the silicon-carbon composite material. The specific parameters are shown in Table 3.

Comparative Example 2

The preparation method is similar to that of Example 1, except that only the silicon-carbon composite particle in Preparation Example 1-1 is used as the silicon-carbon composite material. The specific parameters are shown in Table 3.
In addition, the silicon-carbon composite materials and lithium-ion secondary batteries obtained in the above Examples 1 to 9 and Comparative Examples 1 and 2 are subjected to performance tests. The test results were as shown in Table 3.

1. Material capacity test

Preparation of button battery:

The above prepared silicon-carbon composite material, the conductive carbon black, the binder styrene-butadiene rubber (SBR), and the thickener sodium carboxymethyl cellulose (CMC-Na) are fully stirred and uniformly mixed in a deionized water solvent system according to a mass ratio of 95:2:2:1 to obtain a negative electrode slurry; the negative electrode slurry is evenly coated on a negative electrode current collector (copper foil); then after drying and cold pressing, a negative electrode plate is obtained; and then a metal lithium sheet is used as a counter electrode and a polypropene (PP) film is used as the separator to assemble a CR2430 button battery in an argon-protected glove box, where a formula of the electrolyte solution is as follows: in an argon atmosphere glove box ($H_2O$ content<0.1 ppm, and $O_2$ content<0.1 ppm), the lithium salt (lithium hexafluorophosphate $LiPF_6$) is dissolved in an organic solvent ethylene carbonate (EC) and diethyl carbonate (DEC) mixed system (a volume ratio of EC to DEC is 3:7) to be stirred evenly to obtain an electrolyte solution with a lithium salt concentration of 1 mol/L.

The Test process: under room temperature conditions, the button battery is left to stand for 3 hours, then discharged at a constant current of 0.05C to a voltage of 0.005V, further discharged at a constant current of 50μA to a voltage of 0.005V, left to stand for 5 minutes, and then charged at a rate of 0.1C to a voltage of 0.8V; and a capacity at this time is recorded as a de-lithiation capacity, and the de-lithiation capacity is the 0.8V capacity of the silicon-carbon composite material.

2. Test for cycle life of battery

(1) Test for cycle performance in 25°C

Test conditions: the battery is left to stand in 25°C for 30 minutes, then charged at a rate of 0.5C to a voltage of 4.2V, further charged at constant voltage of 4.2V until the current reaches 0.05C, left to stand for 5 minutes, and then discharged at a rate of 0.5C to a voltage of 2.8V, and this is one charge/discharge cycle. The discharge capacity is recorded during each cycle.

Capacity retention rate (%) after n cycles = (discharge capacity of the n-th cycle/discharge capacity of the first cycle) × 100%.

(2) Test for cycle performance in 45°C

Test conditions: the battery is left to stand in 45°C for 30 minutes, then charged at a rate of 1C to a voltage of 4.2V, further charged at constant voltage of 4.2V until the current reaches 0.05C, left to stand for 5 minutes, and then discharged at a rate of 1C to a voltage of 2.8V, this is one charge/discharge cycle, and the discharge capacity is recorded during each cycle.

Capacity retention rate (%) after n cycles of a secondary battery = (discharge capacity of the n-th cycle/discharge capacity of the first cycle) × 100%.

3. Expansion test

The negative electrode plates and the secondary batteries prepared in the above Examples and Comparative Examples are obtained.

Test process: a thickness T0 of the negative electrode plate after cold pressing of each Example and Comparative Example is recorded; and the battery of each Example and Comparative Example is charged at a rate of 0.5C to a voltage of 4.2V, the negative electrode plate at this time is disassembled, and a thickness of the negative electrode plate is tested again and recorded as T1. An expansion formula of the electrode plate is as follows:

$$\text{Expansion rate (\%) of electrode plate} = (T1-T0)/T0 \times 100\%.$$

Table 3

| | Silicon-carbon composite material | | | | | | | | Specific surface area $(m^2/g)$ |
| | First silicon-carbon composite particle | | | Second silicon-carbon composite particle | | | Third silicon-carbon composite particle | | |
| | Type | Silicon content $\omega_1$(%) | Mass percentage content (%) | Type | Silicon content $\omega_2$(%) | Mass percentage content (%) | Type | Mass percentage content (%) | |
|---|---|---|---|---|---|---|---|---|---|
| Example 1 | Preparation Example 1-1 | 55 | 5 | Preparation Example 2-1 | 46 | 95 | / | | 2.9 |
| Example 2 | Preparation Example 1-1 | 55 | 10 | Preparation Example 2-1 | 46 | 90 | | | 3.0 |
| Example 3 | Preparation Example 1-1 | 55 | 0.2 | Preparation Example 2-1 | 46 | 99.8 | | | 2.8 |
| Example 4 | Preparation Example 1-1 | 55 | 5 | Preparation Example 2-2 | 36 | 95 | | | 2.7 |
| Example 5 | Preparation Example 1-2 | 62 | 5 | Preparation Example 2-1 | 46 | 95 | | | 2.8 |
| Example 6 | Preparation Example 1-2 | 62 | 5 | Preparation Example 2-2 | 36 | 95 | | | 2.7 |
| Example 7 | Preparation Example 1-1 | 55 | 5 | Preparation Example 2-1 | 46 | 90 | Preparation Example 3-1 | 5 | 3.2 |
| Example 8 | Preparation Example 1-1 | 55 | 5 | Preparation Example 2-1 | 46 | 80 | Preparation Example 3-1 | 15 | 3.3 |
| Example 9 | Preparation Example 1-1 | 55 | 5 | Preparation Example 2-1 | 46 | 90 | Preparation Example 3-2 | 5 | 3.2 |
| Comparative Example 1 | / | / | / | Preparation Example 2-1 | 44 | 100 | / | / | 2 |
| Comparative Example 2 | Preparation Example 1-1 | 55 | 100 | / | / | / | / | / | 2.1 |

EP 4 693 476 A1

| | Silicon-carbon composite material | | | | | | | | | |
|---|---|---|---|---|---|---|---|---|---|---|
| | Dv50 (μm) | Porosity (%) | Mass percentage content (%) of silicon element | Powder resistivity (Ω·cm) | (Dv90-Dv10)/ Dv50 | Tap density (g/cm$^3$) | Number of turns of cycles in 25°C (turns) | Number of turns of cycles in 45°C (turns) | 0.8V capacity (mAh/g) | Expansion rate (%) of electrode plate |
| Example 1 | 8.7 | 53.1 | 46.6 | 1.2 | 1.08 | 0.75 | 1984 | 1523 | 1698.4 | 51.4 |
| Example 2 | 8.2 | 49.8 | 47.1 | 1.1 | 1.07 | 0.76 | 1963 | 1496 | 1704.8 | 52.1 |
| Example 3 | 8.5 | 52.1 | 46.0 | 1.1 | 1.09 | 0.75 | 1992 | 1555 | 1686.4 | 50.1 |
| Example 4 | 8.3 | 46.3 | 38.0 | 1.3 | 1.1 | 0.77 | 1947 | 1532 | 1688.2 | 50.5 |
| Example 5 | 8.1 | 51.4 | 45.9 | 1.2 | 1.07 | 0.73 | 1922 | 1488 | 1715.9 | 52.3 |
| Example 6 | 8.5 | 45.8 | 36.5 | 1.2 | 1.09 | 0.74 | 1897 | 1422 | 1673.2 | 53.1 |
| Example 7 | 8.2 | 54.8 | 46.1 | 1.4 | 1 | 0.72 | 1977 | 1520 | 1690.5 | 49.0 |
| Example 8 | 8.4 | 55.9 | 43.8 | 1.3 | 1.05 | 0.7 | 1974 | 1519 | 1688.9 | 48.4 |
| Example 9 | 8.1 | 54.0 | 45.8 | 1.5 | 1.02 | 0.71 | 1982 | 1525 | 1693.1 | 49.5 |
| Comparative Example 1 | 8.2 | 50 | 46.0 | 1 | 1.02 | 0.78 | 1881 | 1415 | 1684 | 51.9 |
| Comparative Example 2 | 8.4 | 43 | 55.0 | 1.5 | 1.01 | 0.76 | 1600 | 1320 | 1892 | 55.3 |

According to Table 2, the larger the number of turns of cycles of the lithium-ion secondary batteries obtained in each Example and Comparative Example, the better the cycle performance of the corresponding silicon-carbon composite material is. Compared with Comparative Example 1, the silicon-carbon composite material obtained in each Example has better cycle performance. The silicon-carbon composite materials in Comparative Examples 1 and 2 contain only one type of silicon-carbon composite particles. The silicon element of the silicon-carbon composite particle in Comparative Example 2 has a higher mass percentage content. Although its gram capacity increases accordingly, its cycle performance has deteriorated significantly, and it leads to a higher expansion rate of the electrode plate.

According to Examples 1 to 3 and Comparative Example 1, by adding a certain amount of silicon-carbon composite particles with a higher silicon content, the gram capacity of the material may be increased while improving the cycle performance without significantly deteriorating the expansion of the electrode plate.

According to Examples 4 to 6, a ratio of the mass percentage contents of the silicon elements in different silicon-carbon composite particles in the silicon-carbon composite material has a certain influence on the performance of the silicon-carbon composite material. In a case of $1.06 \leq \omega_1/\omega_2 \leq 1.6$, the silicon-carbon composite material has better cycle performance and smaller expansion rate.

According to Examples 1 and 7 to 9, further adding a certain amount of silicon-carbon composite particles with a lower silicon content may further improve the cycle performance of the silicon-carbon composite material and reduce its expansion rate.

It should be noted that the present application is not limited to the aforementioned implementations. The above embodiments are only examples, and embodiments that have the same composition and exert the same effect as the technical ideas within the scope of the technical solution of the present application are included in the technical scope of the present application. In addition, without departing from the scope of the main intention of the present application, various modifications that can be conceived by those skilled in the art for the implementations, and other forms constructed by combining some of the constituent elements of the implementations are also included within the scope of the present application.

**Claims**

1. A negative electrode active material, comprising a silicon-carbon composite material, wherein the silicon-carbon composite material comprises a first silicon-carbon composite particle and a second silicon-carbon composite particle;

   the first silicon-carbon composite particle comprises a first carbon matrix having a pore structure and a first silicon-based material arranged in the pore structure of the first carbon matrix;
   the second silicon-carbon composite particle comprises a second carbon matrix having a pore structure and a second silicon-based material arranged in the pore structure of the second carbon matrix; and
   a mass percentage content of a silicon element in the first silicon-carbon composite particle is greater than a mass percentage content of a silicon element in the second silicon-carbon composite particle.

2. The negative electrode active material according to claim 1, wherein

   the mass percentage content of the silicon element in the first silicon-carbon composite particle is $\geq 50\%$, optionally, 50% to 60%; and/or,
   the mass percentage content of the silicon element in the second silicon-carbon composite particle is $\leq 47\%$, optionally, 38% to 47%.

3. The negative electrode active material according to claim 1 or 2, wherein the mass percentage content of the silicon element in the first silicon-carbon composite particle is recorded as $\omega_1$, the mass percentage content of the silicon element in the second silicon-carbon composite particle is recorded as $\omega_2$, and the negative electrode active material satisfies: $1.06 \leq \omega_1/\omega_2 \leq 1.6$, optionally, 1.1-1.3.

4. The negative electrode active material according to any one of claims 1 to 3, wherein

   the first carbon matrix comprises a micropore structure, and the micropore structure in the first carbon matrix has a pore volume $V_1 \geq 0.6$ cm$^3$/g, optionally, 0.6 cm$^3$/g to 0.75 cm$^3$/g; and/or,
   the second carbon matrix comprises a micropore structure, and the micropore structure in the second carbon matrix has a pore volume $V_2 \geq 0.4$ cm$^3$/g, optionally, 0.5 cm$^3$/g to 0.7 cm$^3$/g.

5. The negative electrode active material according to any one of claims 1 to 4, wherein the first carbon matrix and the second carbon matrix each comprise the micropore structure, and the pore volume of the micropore structure in the first carbon matrix is greater than the pore volume of the micropore structure in the second carbon matrix.

6. The negative electrode active material according to any one of claims 1 to 5, wherein

the pore structure in the first carbon matrix has an average pore diameter $d_1 \leq 5$ nm, optionally, 1 nm to 4 nm; and/or,
the pore structure in the second carbon matrix has an average pore diameter $d_2 \leq 10$ nm, optionally, 3 nm to 5 nm.

7. The negative electrode active material according to any one of claims 1 to 6, wherein the average pore diameter of the pore structure in the first carbon matrix is less than the average pore diameter of the pore structure in the second carbon matrix.

8. The negative electrode active material according to any one of claims 1 to 7, wherein

the first carbon matrix has a specific surface area $BET_1 \geq 1800$ m$^2$/g, optionally, 1800 m$^2$/g to 2000 m$^2$/g; and/or,
the second carbon matrix has a specific surface area $BET_2 \geq 1600$ m$^2$/g, optionally, 1600 m$^2$/g to 1800 m$^2$/g.

9. The negative electrode active material according to any one of claims 1 to 8, wherein the specific surface area of the first carbon matrix is greater than the specific surface area of the second carbon matrix.

10. The negative electrode active material according to any one of claims 1 to 9, wherein based on the silicon-carbon composite material, a mass content of the first silicon-carbon composite particle is less than a mass content of the second silicon-carbon composite particle.

11. The negative electrode active material according to any one of claims 1 to 10, wherein

based on the silicon-carbon composite material, the mass content of the first silicon-carbon composite particle is $\leq 10\%$, optionally, 0.1% to 5%; and/or,
based on the silicon-carbon composite material, the mass content of the second silicon-carbon composite particle is $\geq 80\%$, optionally, 80% to 99.8%.

12. The negative electrode active material according to any one of claims 1 to 11, wherein at least a part of a surface of the first silicon-carbon composite particle and/or the second silicon-carbon composite particle has a coating layer, and optionally, the coating layer is a carbon coating layer.

13. The negative electrode active material according to any one of claims 1 to 12, wherein the silicon-carbon composite material further comprises a third silicon-carbon composite particle, the third silicon-carbon composite particle comprises a third carbon matrix having a pore structure and a third silicon-based material arranged in the pore structure of the third carbon matrix, a mass percentage content of a silicon element in the third silicon-carbon composite particle is less than the mass percentage content of the silicon element in the first silicon-carbon composite particle, and the mass percentage content of the silicon element in the third silicon-carbon composite particle is less than the mass percentage content of the silicon element in the second silicon-carbon composite particle.

14. The negative electrode active material according to any one of claims 1 to 13, wherein the silicon-carbon composite material further comprises the third silicon-carbon composite particle, the first silicon-carbon composite particle comprises the third carbon matrix having the pore structure and the third silicon-based material arranged in the pore structure of the third carbon matrix, an average pore diameter of the pore structure in the third carbon matrix is less than the average pore diameter of the pore structure in the first carbon matrix, and the average pore diameter of the pore structure in the third carbon matrix is less than the average pore diameter of the pore structure in the second carbon matrix.

15. The negative electrode active material according to any one of claims 1 to 14, wherein the silicon-carbon composite material further comprises the third silicon-carbon composite particle, the first silicon-carbon composite particle comprises the third carbon matrix having the pore structure and the third silicon-based material arranged in the pore structure of the third carbon matrix, a specific surface area of the third carbon matrix is less than the specific surface area of the first carbon matrix, and the specific surface area of the third carbon matrix is less than the specific surface area of the second carbon matrix.

16. The negative electrode active material according to any one of claims 13 to 15, wherein the third silicon-carbon composite particle satisfies at least one of the following conditions:

1) the mass percentage content of the silicon element in the third silicon-carbon composite particle is $\leq 25\%$, optionally, 20% to 25%;
2) the pore structure in the third carbon matrix has the average pore diameter $d_3 \leq 4$ nm, optionally, 1 nm to 3 nm;
3) the third carbon matrix comprises micropores having a pore diameter <2 nm, wherein a percentage p for which a pore volume of each micropore accounts of a total pore volume is $\geq 60\%$, optionally, 70% to 85%;
4) a powder compacted density of the third carbon matrix under a pressure of 49000N is 0.4 g/cm$^3$ to 1.1 g/cm$^3$, preferably, 0.4 g/cm$^3$ to 0.8 g/cm$^3$; or
5) the third carbon matrix has the specific surface area $BET_3 \geq 1000$ m$^2$/g, preferably, 1000 m$^2$/g to 1300 m$^2$/g.

17. The negative electrode active material according to any one of claims 13 to 16, wherein at least one of the first silicon-based material, the second silicon-based material, or the third silicon-based material comprises silicon grains; optionally, a grain size of the silicon grains is less than or equal to 10 nm.

18. The negative electrode active material according to any one of claims 1 to 17, wherein the silicon-carbon composite material satisfies at least one of the following conditions:

1) the specific surface area of the silicon-carbon composite material is less than or equal to 6 m$^2$/g, optionally, $\leq 4$ m$^2$/g;
2) a volume average particle diameter Dv50 of the silicon-carbon composite material is in a range from 5 $\mu$m to 15 $\mu$m, optionally, 5 $\mu$m to 10 $\mu$m;
3) based on a total mass of the silicon-carbon composite material, the mass percentage content of the silicon element in the silicon-carbon composite material is in a range from 35% to 50%, optionally, 40% to 50%;
4) a porosity of the silicon-carbon composite material is in a range from 45% to 65%, optionally, 45% to 55%;
5) a powder compacted density of the silicon-carbon composite material under a pressure of 49000N is in a range from 0.8 g/cm$^3$ to 1.2 g/cm$^3$, optionally, 0.9 g/cm$^3$ to 1.1 g/cm$^3$;
6) a tap density of the silicon-carbon composite material is in a range from 0.6 g/cm$^3$ to 1.0 g/cm$^3$, optionally, 0.7 g/cm$^3$ to 0.9 g/cm$^3$;
7) a powder resistivity of the silicon-carbon composite material is $\leq 5$ $\Omega \cdot$cm, optionally, $\leq 3$ $\Omega \cdot$cm; or
8) the silicon-carbon composite material satisfies (Dv90-Dv10)/Dv50$\leq 5$, optionally, $\leq 2.5$.

19. A secondary battery, comprising a negative electrode plate, wherein the negative electrode plate comprises a negative electrode current collector and a negative electrode film layer, the negative electrode film layer comprises a negative electrode active material, and the negative electrode active material comprises the silicon-carbon composite material according to any one of claims 1 to 18.

20. An electrical apparatus, comprising the secondary battery according to claim 19.

5

# FIG. 1

5

53

52
52

51

# FIG. 2

4
5
5
5

# FIG. 3

1

FIG. 4

1

2

3

4

FIG. 5

FIG. 6

## INTERNATIONAL SEARCH REPORT

| International application No. |
| :--- |
| **PCT/CN2024/095941** |

| A. | CLASSIFICATION OF SUBJECT MATTER |
| :--- | :--- |

H01M4/36(2006.01)i; H01M4/134(2010.01)i; H01M10/0525(2010.01)i; H01M4/583(2010.01)i; H01M10/00(2006.01)i; H01M4/02(2006.01)i

According to International Patent Classification (IPC) or to both national classification and IPC

| B. | FIELDS SEARCHED |
| :--- | :--- |

Minimum documentation searched (classification system followed by classification symbols)

IPC:H01M4/-,H01M10/-

Documentation searched other than minimum documentation to the extent that such documents are included in the fields searched

Electronic data base consulted during the international search (name of data base and, where practicable, search terms used)

CNTXT, ENTXTC, DWPI, ENTXT, CNKI: 宁德时代, 负极, 碳硅, 硅碳, 第一, 第二, 孔, 硅, 活性物质, 活性材料, cathode, active material? , carbon-silicon, first, second, hole, silicon

| C. | DOCUMENTS CONSIDERED TO BE RELEVANT |
| :--- | :--- |

| Category* | Citation of document, with indication, where appropriate, of the relevant passages | Relevant to claim No. |
| :---: | :--- | :---: |
| Y | CN 104518207 A (BYD CO., LTD.) 15 April 2015 (2015-04-15) <br> claim 1 | 1-20 |
| Y | CN 116387493 A (SHENZHEN KINGRUNNING ENERGY MATERIALS CO., LTD.) 04 July 2023 (2023-07-04) <br> description, paragraphs 4-41 | 1-20 |
| A | CN 117117159 A (HOOSUN INTELLIGENCE EQUIPMENT (TAICANG) CO., LTD.) 24 November 2023 (2023-11-24) <br> entire document | 1-20 |
| A | WO 2022178748 A1 (NINGDE AMPEREX TECHNOLOGY LTD.) 01 September 2022 (2022-09-01) <br> entire document | 1-20 |

☐ Further documents are listed in the continuation of Box C.    ☑ See patent family annex.

| * | Special categories of cited documents: |
| :--- | :--- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| :--- | :--- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| :--- | :--- |
| **01 August 2024** | **13 August 2024** |

| Name and mailing address of the ISA/CN | Authorized officer |
| :--- | :--- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
#### Information on patent family members

International application No.

**PCT/CN2024/095941**

| Patent document cited in search report | | | Publication date (day/month/year) | Patent family member(s) | | | Publication date (day/month/year) |
|---|---|---|---|---|---|---|---|
| CN | 104518207 | A | 15 April 2015 | CN | 104518207 | B | 20 April 2018 |
| CN | 116387493 | A | 04 July 2023 | None | | | |
| CN | 117117159 | A | 24 November 2023 | None | | | |
| WO | 2022178748 | A1 | 01 September 2022 | CN | 116941068 | A | 24 October 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311639597X
- GB 195872017 T
- GB 2165022008 T
- GB 190772016 T
- GB 24586 T
- GB 308351994 T
- GB 245332009 T
- GB 51622006 T